(19) **Europäisches Patentamt**
**European Patent Office**
**Office européen des brevets**

(11) **EP 2 991 399 B1**

(12) # EUROPEAN PATENT SPECIFICATION

(45) Date of publication and mention
of the grant of the patent:
**30.08.2017 Bulletin 2017/35**

(51) Int Cl.:
***H04W 28/18*** *(2009.01)* ***H04W 16/28*** *(2009.01)*

(21) Application number: **13882953.6**

(22) Date of filing: **23.04.2013**

(86) International application number:
**PCT/JP2013/061861**

(87) International publication number:
**WO 2014/174584 (30.10.2014 Gazette 2014/44)**

(54) **COMMUNICATION SYSTEM, USER TERMINAL AND SERVING BASE STATION**

KOMMUNIKATIONSSYSTEM, BENUTZERENDGERÄT UND VERBINDUNGSBASISSTATION

SYSTÈME DE COMMUNICATION, TERMINAL UTILISATEUR ET STATION DE BASE DE CONNEXION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.03.2016 Bulletin 2016/09**

(73) Proprietor: **Fujitsu Limited**
**Kawasaki-shi, Kanagawa 211-8588 (JP)**

(72) Inventor: **JITSUKAWA, Daisuke**
**Kawasaki-shi**
**Kanagawa 211-8588 (JP)**

(74) Representative: **Schultes, Stephan**
**Haseltine Lake LLP**
**300 High Holborn**
**London WC1V 7JH (GB)**

(56) References cited:
**JP-A- 2012 147 103     JP-A- 2012 227 620**
**JP-A- 2012 520 001**

- **TEXAS INSTRUMENTS: "CoMP JT evaluation for Phase II Heterogeneous Deployment", 3GPP DRAFT; R1-112155_TI_COMP_PHASEII, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20110822, 18 August 2011 (2011-08-18), XP050537802, [retrieved on 2011-08-18]**

- **CATT: "Aspects of Joint Processing in Downlink CoMP", 3GPP DRAFT; R1-090193, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Ljubljana; 20090108, 8 January 2009 (2009-01-08), XP050318126, [retrieved on 2009-01-08]**

- **MEDIATEK INC: "Phase Adjustment Mechanism in CoMP", 3GPP DRAFT; R1-094771 (PHASE ADJUSTMENT MECHANISM IN COMP), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 13 November 2009 (2009-11-13), XP050389168, [retrieved on 2009-11-03]**

- **SAMSUNG: "Discussion on CoMP with Implicit CQI Feedback", 3GPP DRAFT; R1-094093 DISCUSSION ON COMP WITH IMPLICIT CQI FEEDBACK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050388569, [retrieved on 2009-10-06]**

**(Cont. next page)**

EP 2 991 399 B1

- NEC GROUP: "Potential gain of DL CoMP with joint transmission", 3GPP DRAFT; R1-091688, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090428, 28 April 2009 (2009-04-28), XP050339227, [retrieved on 2009-04-28]

- MEDIATEK INC.: 'Phase Adjustment Mechanism in CoMP' 3GPP TSG RAN WG1 MEETING #59 R1-094771 XP050389168
- SAMSUNG: 'Discussion on CoMP with Implicit CQI Feedback' 3GPP TSG RAN WG1 MEETING #58BIS R1-094093 XP050388569

## Description

FIELD

The embodiments discussed herein are related to a communication system, a method for communication, a user terminal, a method for controlling, and a serving base station.

BACKGROUND

A communication system including a user terminal and multiple base stations is known. A communication system of this kind carries out CoMP (Coordinated Multi-Point) communication in which wireless signals containing the same data are transmitted through the respective cells of the multiple base stations to the user terminal (for example, see Non-Patent Literature 1).

Such multiple cells include a serving cell and a coordinated cells. A serving cell is a cell in which a wireless resource that enables the user terminal and a base station to exchange control information to control the communication therebetween. Coordinated cells are the remaining cells except for the serving cell.

This configuration makes it possible to enhance the throughput of the entire communication system and also the throughput of a user terminal located at an edge of a cell.

Further, with regard to a communication system explained above, the following first through fourth communication systems are known (see Patent Literatures 1-4 below).

In the first communication system, a mobile station feeds back information (CSI) based on the states of transmission paths of an anchor base station and coordinated base stations to the anchor base station. And the anchor base station determines a precoding matrices based on the fed-back CSI.

In the second communication system, a coordination-source base station transmits target data for coordinated transmission and coordination control information to the coordination-destination base station. And in the second communication system, the coordination-destination base station transmits target data for coordinated transmission to a communication terminal on the basis of the coordination control information received from the coordination-source base station.

In the third communication system, a base station receives a backhaul message through an X2 interface from another base station. And the third communication system processes data blocks on the basis of synchronization-loss information in the received backhaul message, and sends the processed data blocks to a mobile station.

In the fourth communication system, a terminal transmits PMI (Precoding Matrix Indicator) information that requests restriction and/or recommendation on a CoMP adjacent cell to a serving base station. In the fourth communication system, the PMI information received by the serving cell is further transmitted to the CoMP adjacent cell.

[Prior Art Reference]

[Patent Literature]

[Patent Literature 1] Japanese Laid-open Patent Publication No. 2011-4161
[Patent Literature 2] Japanese Laid-open Patent Publication No. 2012-178822
[Patent Literature 3] Japanese National Publication of International Patent Application No. 2012-521112
[Patent Literature 4] Japanese National Publication of International Patent Application No.2012-520001

[Non-Patent Literature]

[Non-Patent Literature 1] 3rd Generation Partnership Project, "Technical Specification Group Radio Access Network; Coordinated multi-point operation for LTE physical layer aspects (Release 11)", 3GPP TR36.819, December, 2011, V11.1.0
[Non-Patent Literature 2] Texas Instruments, "CoMP JT evaluation for Phase II Heterogeneous Deployment," R1-112155, 3GPP TSG RAN WG1 Meeting #66, Athens, Greece, August 22-26, 2011, presents evaluation results of CoMP joint transmission (JT) in Phase II heterogeneous deployments, which show that CoMP-JT, assuming ideal time/frequency synchronization and backhaul link, achieves further performance gain over Rel. 10. The performance gains of CoMP-JT are mostly observed in terms of cell-edge coverage, while cell-average gain is marginal.

SUMMARY OF THE INVENTION

PROBLEMS TO BE SOLVED BY THE INVENTION

Here, a difference (an amount of phase change) between the phase on a complex plane that a wireless signal transmitted from a base station has and the phase on a complex plane that the wireless signal received by a user terminal has is different with a cell. And an amount of phase change fluctuates in a relatively short time span in response to change in propagation environment of a wireless signal due to, for example, movement of the user terminal.

As one of the solutions to the above, a communication system as follows may be proposed. Such a communication system includes a user terminal and multiple base stations. The user terminal obtains individual adjusting parameters, one for each of multiple coordinated cells, on the basis of a wireless signal received in each coordinated cell and a wireless signal received in the serving cell. An individual adjusting parameter is a parameter to adjust a cell phase, which is a phase on the complex plane that a wireless signal transmitted in the corresponding coordinated cell has.

Furthermore, a user terminal sends a serving base station control information including the individual station control information including the individual adjusting parameters obtained for the respective coordinated cells. A serving base station is a base station that has a serving cell. Besides, the serving base station sends to each coordinated base station the corresponding individual adjusting parameter. A coordinated base station is a base station that has a coordinated cell. And upon receipt of the parameter, each coordinated base station controls execution of CoMP communication such that the cell phase is adjusted on the basis of the received individual adjusting parameter.

However, communication between a serving base station and a coordinated base station delays relatively largely. Consequently, there is a possibility that an amount of phase change largely fluctuates during the time period between the receipt of an individual adjusting parameter and the start of CoMP communication based on the received individual adjusting parameter. In the event of above case, the quality (receiving quality) of a wireless signal at the user terminal degrades because the amount of phase change at the time of the start of the CoMP communication is not reflected in the individual adjusting parameter.

Thus the communication system having the above configuration has a problem of, when the state of communication of each cell fluctuates in a relatively short time span, lowering the receiving quality of a user terminal.

With foregoing problems in view, an object of the present invention is to provide a communication system to solve the above problem of lowering the receiving quality of a user terminal.

In addition to the above object, effects derived from the respective configurations but have not been derived by conventional techniques can be regarded as another effects of the present invention.

MEANS TO SOLVE THE PROBLEMS

According to an aspect of the embodiments, there is provided a communication system including a user terminal and a plurality of base stations. Further, the communication system carries out CoMP (Coordinated Multi-Point) communication in which wireless signals containing the same data to the user terminal are transmitted through a plurality of cells including a serving cell and a plurality of coordinated cells except for the serving cell. The serving cell provides a wireless resource for exchanging control information to control communication between the user terminal and at least one of the plurality of base stations.

The communication system further includes a selector that selects a reference coordinated cell among the plurality of coordinated cells, the reference coordinated cell being a reference to adjust a serving-cell phase representing a phase on a complex plane that a wireless signal transmitted through the serving cell has.

In addition, the foregoing user terminal includes an adjusting parameter obtainer that obtains an adjusting parameter to adjust the serving-cell phase using the wireless signal received through the selected reference coordinated cell and the wireless signal received through the serving cell. Further, the foregoing user terminal includes a transmitter that transmits the control information including the obtained adjusting parameter to a serving base station that provides the serving cell and that is one of the plurality of base stations.

In addition, the serving base station includes a controller that receives the control information and controls execution of the CoMP communication such that the serving-cell phase is adjusted on the basis of the adjusting parameter included in the received control information.

EFFECT OF THE INVENTION

The communication system disclosed herein can enhance the receiving quality at a user equipment.

BRIEF DESCRIPTION OF DRAWINGS

FIG. 1 is a diagram schematically illustrating the configuration of a communication system according to an example of a first embodiment;
FIG. 2 is a block diagram schematically illustrating the configuration of a base station of an example of the first embodiment;
FIG. 3 is a block diagram schematically illustrating the configuration of a user terminal of an example of the first embodiment;
FIG. 4 is a block diagram schematically illustrating the function of a base station of an example of the first embodiment;
FIG. 5 is a block diagram schematically illustrating the function of a user terminal of an example of the first embodiment;
FIG. 6 is a sequence diagram depicting operation performed in a communication system of an example of the first embodiment;
FIG. 7 is a flow diagram depicting a succession of procedural steps of calculating a phase adjusting amount by a user terminal equipment of an example of the first embodiment;
FIG. 8 is a flow diagram depicting a succession of procedural steps of a process of CoMP communication at a serving cell by a base station of an example of the first embodiment;
FIG. 9 is a flow diagram depicting a succession of procedural steps of a process of CoMP communication at a coordinated cell by a base station of an example of the first embodiment;
FIG. 10 is a flow diagram depicting a succession of procedural steps of updating a phase adjusting amount by a base station of an example of the first embodiment;
FIG. 11 is a diagram schematically illustrating the function of a user terminal according to an example of a

second embodiment; and

FIG. 12 is a diagram schematically illustrating the function of a user terminal according to an example of a third embodiment.

DESCRIPTION OF EMBODIMENT(S)

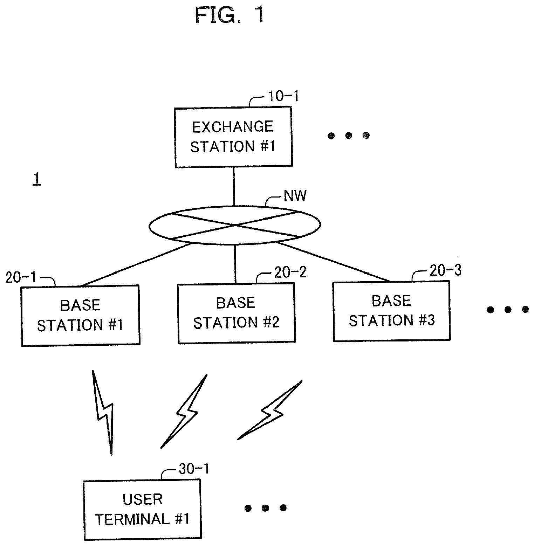

Hereinafter, description will now be made in relation to embodiments of a communication system, a method for communication, a user equipment, a method for controlling, and a serving base station that cope with at least one of the above problems with reference to FIGs. 1-12.

First embodiment:

(Overview)

A communication system according to a first embodiment includes a user terminal and multiple base stations. The communication system carries out CoMP (Coordinated Multi-Point) communication, in which wireless signals containing the same data are transmitted through the respective cells including the connection cell and multiple coordinated cells to the user terminal. Here, the serving cell provides a wireless resource that enables the user terminal and a base station to exchange control information to control the communication therebetween. The coordinated cells are the remaining cells except for the serving cell.
For the beginning, the communication system selects one from the multiple coordinated cells as a reference coordinated cell, which is regarded as a reference to adjust a serving-cell phase representing a phase on the complex plane that a wireless signal transmitted through the serving cell has.
And the user terminal obtains an adjusting parameter to adjust the serving-cell phase on the basis of a wireless signal received through the selected reference coordinated cell and a wireless signal received through the serving cell. Then, the user terminal sends control information containing the obtained adjusting parameter to the serving base station that has the serving cell among the multiple base stations.
And the serving base station receives the control information and controls the execution of the CoMP communication such that the serving-cell phase is adjusted on the basis of the adjusting parameter contained in the received control information.
In the communication system having the above configuration, the serving-cell phase can be adjusted without exchanging information to adjust the phase of a wireless signal on the complex plane between the serving base station and another base station. This can avoid lowering, even when the state of communication of each cell fluctuates in a relatively short time span, the receiving quality in the user terminal.

Hereinafter, the first embodiment will now be detailed.

(Configuration)

As illustrated in FIG. 1, a communication system 1 of the first embodiment includes multiple exchange stations 10-1,..., multiple base stations 20-1, 20-2, 20-3,..., and multiple user terminals (mobile stations) 30-1,....

And hereinafter, the exchange station 10-1 may sometimes be referred to as the exchange station #1. When there is no need to discriminate the multiple exchange stations 10-1,... from one another, an arbitrary exchange station may sometimes be represented by the "exchange station 10." Likewise, the multiple base stations 20-1, 20-2, and 20-3 may sometimes be referred to as the base station #1, the base station #2, and the base station #3, respectively. When there is no need to discriminate the multiple base stations 20-1, 20-2, 20-3, ... from one another, an arbitrary base station may sometimes be represented by the "base station 20."

Likewise, the user terminal 30-1 may sometimes be referred to as the user terminal #1. When there is no need to discriminate the multiple user terminals 30-1,... from one another, an arbitrary user terminal may sometimes be represented by the "user terminal 30."

Furthermore, the number of at least one of the number of exchange stations 10, the number of base stations 20, and the number of user terminals 30 may be one.

The communication system 1 serves as a mobile communication system. In the present example, the communication system 1 is configured to carry out communication in conformity with a technique of LTE (Long Term Evolution). Alternatively, the communication system 1 may be configured to carry out communication in conformity with a technique of LTE-Advanced. Alternatively, the communication system 1 may be configured to carry out communication in conformity with a technique of WiMAX (Worldwide Interoperability for Microwave Access). In the present example, the communication system 1 carries out Time Division Duplex (TDD).

An exchange station 10 is also referred to as an MME (Mobility Management Entity). Further, a base station 20 is also referred to as an eNB (Evolved Node B). And a user terminal 30 is also referred to as a UE (User Equipment).

The exchange stations 10-1,... and the base stations 20-1, 20-2, 20-3, ... are communicably connected to one another via a communication network NW. In the present example, each of the exchange stations 10-1,..., and the base stations 20-1, 20-2, 20-3, ... is wired-communicably connected to the communication network NW. Alternatively, at least one of the exchange stations 10-1,..., and the base stations 20-1, 20-2, 20-3, ... may be wirelessly-communicably connected to the communication network NW.

Each base station 20 includes at least one cell. In the present example, a cell may be a macrocell, a microcell, a nanocell, a picocell, a femtocell, a homecell, or a sectorcell. Each base station 20 is configured to be wirelessly-communicable with a user terminal 30 located in a cell that the same base station 20 has (provides).

Specifically, each base station 20 provides a wireless resource (in the present example, time slots and frequency bands) in each cell that the base station 20 has. Each base station 20 communicates with a user terminal 30 located in the cell that the base station 20 has using the wireless resource provided in the cell. This allows each base station 20 to relay communication between a user terminal 30 and an exchanging station 10.

When a user terminal 30 is positioned in a single cell, the communication system 1 uses the single cell as the serving cell for the user terminal 30. In contrast, when a user terminal 30 is positioned in multiple cells, the communication system 1 uses one of the multiple cells as the serving cell for the user terminal 30.

A serving cell is one that provides a wireless resource to exchange control information for controlling the communication between a user terminal 30 and a base station 20. In other words, a base station (serving base station) 20 having a cell that is used as the serving cell of a user terminal 30 provides a wireless resource to exchange control information for controlling the communication with the user terminal 30 in the serving cell. For example, the communication system 1 uses a cell having the highest communication quality as a serving cell.

A base station (serving base station) 20 having a serving cell determines whether or not a predetermined CoMP condition is satisfied. For example, a CoMP condition may be that the communication quality is lower than a predetermined threshold. Furthermore, a CoMP condition may be that the communication rate (communicated data volume per unit time) is lower than a predetermined threshold. And a CoMP condition may be that the number of cells accommodating the position of a user terminal 30 is larger than a predetermined threshold. And a CoMP condition may be that a difference between a receiving power of a wireless signal through the serving cell and a receiving power of a wireless signal received through at least one other cell which are measured by the user terminal 30 is smaller than a predetermined threshold.

When the user terminal 30 is positioned in multiple cells and when a CoMP condition is satisfied, the serving base station 20 selects one or more coordinated cells and carries out CoMP communication using multiple cells of the selected coordinated cells and the serving cells.

A CoMP communication is one in which a wireless signal is transmitted to a user terminal 30 through coordinated control accomplished by multiple cells of one or more coordinated cells and a serving cell. Specifically, the communication system 1 carries out JT (Joint Transmission) in which wireless signals representing the same data are transmitted to the user terminal 30 through the respective different cells using the same wireless resource to execute the CoMP communication. In the present example, the same wireless resource means wireless resources having the same time slot and the same frequency band.

In the present example, a wireless signal is generated by a modulation such that a bit string has one or more components corresponding to a position associated with the bit string on a complex plane. In the present example, a complex plane is a plane (IQ plane) defined by a first axis representing an In-Phase component and a second axis being perpendicular to the first axis and representing a Quadrature-Phase component.

Further in this example, the base station 20 carries out a precoding process based on a precoding matrix in each cell and transmits the wireless signal after undergoing the precoding process to the user terminal 30 through multiple antennas (physical antennas). A precoding process adds weight to each modulation symbol representing data for each physical antenna to accomplish beamforming toward the user terminal 30.

The base station 20 may be configured to carry out, in each local cell that the base station 20 provides, Spatial Multiplexing transmission that simultaneously transmits multiple data streams using the same frequency band or MIMO multiplexing transmission according to the communication state. MIMO is an abbreviation of Multiple-Input and Multiple-Output.

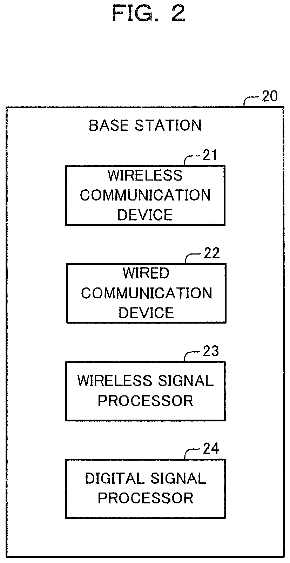

As illustrated in FIG. 2, the base station 20 includes a wireless communication device 21, a wired communication device 22, a wireless signal processor 23, and a digital signal processor 24.

The wireless communication device 21 includes multiple antennas (physical antennas). The number of antennas that the wireless communication device 21 has is also referred to as a "physical antenna number." The wireless communication device 21 wirelessly communicates with a user terminal 30 positioned in a cell that the base station 20 has through the antennas.

The wired communication device 22 includes a communication port to which a communication cable can be connected. The wired communication device 22 is connected to the communication network NW via a communication cable, so that the wired communication device 22 can communicate with another station (the exchange station 10 and the base station 20) connected to the communication network NW.

The wireless signal processor 23 converts a wireless signal received through the antenna into a baseband signal, and outputs the converted baseband signal to the digital signal processor 24. In the present example, a wireless signal is an analog signal having a wireless frequency band. Furthermore, the wireless signal processor 23 converts a baseband signal output from the digital signal processor 24 into a wireless signal and transmits the converted wireless signal to the outside space through the antenna. In the present example, the wireless signal processor 23 is formed of a Large Scale Integration (LSI).

The digital signal processor 24 carries out a baseband process on the basis of a baseband signal output from the wireless signal processor 23. The digital signal processor 24 carries out the baseband process using the baseband signal output from the wireless signal processor 23 and data received through the wired communication device 22 from another station.

The digital signal processor 24 transmits data generated through the baseband process to another station through the wired communication device 22 and generates a new baseband signal through the baseband process. The digital signal processor 24 outputs the generated baseband signal to the wireless signal processor 23.

In the present example, the digital signal processor 24 is formed of a Digital Signal Processor (DSP).

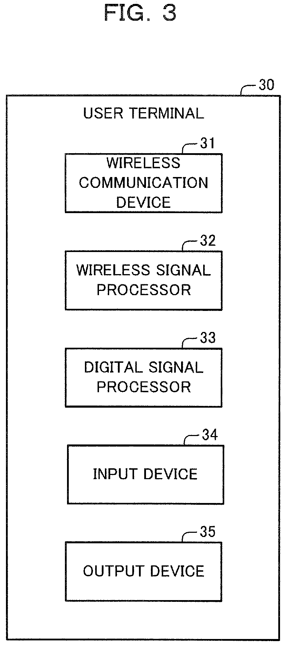

As illustrated in FIG. 3, the user terminal 30 includes a wireless communication device 31, a wireless signal processor 32, a digital signal processor 33, an input device 34, and an output device 35.

The wireless communication device 31 includes at least one antenna. The wireless communication device 31 carries out wireless communication with the base station 20 that has a cell accommodating the position of the local user terminal 30.

The wireless signal processor 32 converts a wireless signal received through the antenna to a baseband signal, and outputs the converted baseband signal to the digital signal processor 33. Furthermore, the wireless signal processor 32 converts the baseband signal output from the digital signal processor 33 to a wireless signal and outputs the converted wireless signal to the outside space via the antenna.

The digital signal processor 33 carries out a baseband process on the basis of the baseband signal output from the wireless signal processor 32. The digital signal processor 33 carries out the baseband process based on the baseband signal output from the wireless signal processor 32 and data that the user has input via an input device.

The digital signal processor 33 outputs data generated through the baseband process via an output device, and generates a new baseband signal through the baseband process. The digital signal processor 33 outputs the generated baseband signal to the wireless signal processor 32.

In the present example, the user terminal 30 includes a microphone, and a key-type button serving as the input device 34. Further, the user terminal 30 includes a speaker serving as the output device 35. Additionally, the user terminal 30 includes a touch-panel display serving as both the input device 34 and the output device 35.

(Function)

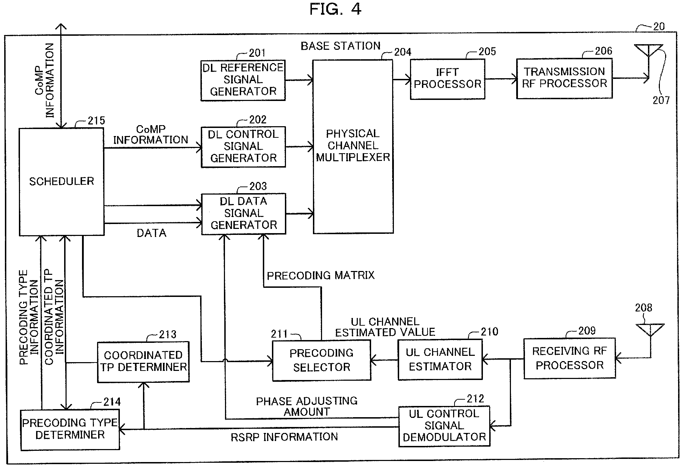

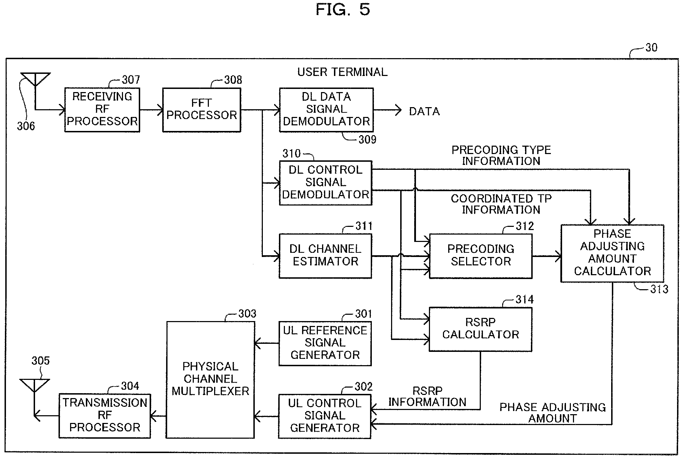

Next, description will now be made in relation to the function of the communication system 1 with reference to FIGs. 4 and 5.

FIG. 4 illustrates a function of the base station 20 to deal with a single cell. This means that the base station 20 has the function of FIG. 4 for each at least one individual cell that the base station 20 has. Here, while the function to deal with a single cell will now be described, a similar description will be applied to the function to deal with another cell when the base station 20 has multiple cells.

As illustrated in FIG. 4, the function of the base station 20 includes a DL reference signal generator 201, a DL control signal generator 202, a DL data signal generator 203, a physical channel multiplexer 204, and an IFFT processor 205. The function of the base station 20 further include a transmission RF processor 206, a transmission antenna 207, a receiving antenna 208, and a receiving RF processor 209. In addition the function of the base station 20 includes a UL channel estimator 210, a precoding selector 211, a UL control signal demodulator 212, a coordinated TP determiner 213, a precoding type determiner 214, and a scheduler 215.

In the present example, the transmission RF processor 206 through the receiving RF processor 209 are achieved by the wireless communication device 21 and the wireless signal processor 23. The DL reference signal generator 201 through the IFFT processor 205 and the UL channel estimator 210 through the scheduler 215 are achieved by the digital signal processor 24.

Furthermore, the precoding type determiner 214 is an example of a selector. The DL data signal generator 203 and the scheduler 215 are comprehensively an example of a controller. And the precoding type determiner 214 and the scheduler 215 are comprehensively an example of a transmitter.

The DL reference signal generator 201 generates a downlink reference signal (RS: Reference Signal). The downlink reference signal may sometimes be abbreviated to a DL reference signal. Furthermore, the DL reference signal may include a cell identifier to identify the cell.

In the present example, the DL reference signal generator 201 generates, as a DL reference signal, a Cell-Specific RS (CRS) serving as a reference signal peculiar to the cell, a Channel State Information RS (CSI RS) serving as a reference signal peculiar to the cell and being used to measure the CSI, and a UE-Specific RS serving as a reference signal peculiar to the user terminal 30 and being used to demodulate a data signal.

The DL control signal generator 202 generates a downlink control signal (DL control signal). A control signal is a signal that represents control information. A control signal is used to control the communication between the user terminal 30 and the base station 20. For example, control information represented by a DL control signal includes information representing a wireless resource allocated to the user terminal 30 and CoMP information that is to be detailed below.

The DL data signal generator 203 generates a downlink data signal (DL data signal). Specifically, the DL data signal generator 203 generates a DL data signal on the basis of a basic data signal representing data received from another station.

In the present example, the DL data signal generator 203 generates a sequence of modulation symbols based on the basic data signal. The DL data signal generator 203 converts (executes serial-parallel conversion) the generated modulation symbols into a sequences of modulation symbols (unsettled data signal) as many as the data stream number determined on the basis of a communication state (e.g., a communication environment). Furthermore, data stream number is also referred to as a Transmission Layer number, and a Transmission Rank.

The DL data signal generator 203 further executes the precoding process on the data stream number of modulation symbols, so that multiple sequences of modulation symbols (DL data signals) correspond to as many as the number of antennas that the base station 20 has can be generated.

Furthermore, when the user terminal 30 using a cell (local cell) that the base station 20 has as a serving cell satisfies the CoMP condition, the base station 20 determines to transmit a DL data signal destined for the user terminal 30 in conformity with the CoMP communication. In contrast, when the user terminal 30 using a local cell that the base station 20 has as a serving cell does not satisfy CoMP condition, the base station 20 determines not to transmit DL data signal destined for the user terminal 30 in the CoMP communication

Furthermore, when the user terminal 30 using a local cell that the base station 20 has as a coordinated cell, and the base station 20 receives CoMP information from another base station (serving base station) that has a cell that the user terminal 30 uses as the serving cell, the base station 20 determines to transmit a DL data signal destined for the user terminal 30 in the CoMP communication. The CoMP information in this case is transmitted from the serving base station 20 as a result that the serving base station 20 determines that the user terminal 30 satisfies a CoMP condition.

Specifically, the DL data signal generator 203 generates a DL data signal on the basis of a precoding matrix and a phase adjusting amount. In the present example, a DL data signal is a signal that represents data output from the scheduler 215. The precoding matrix is selected for the user terminal 30 being the destination of the generated DL data signal by the precoding selector 211. The phase adjusting amount represents an amount of a phase of a wireless signal on the complex plane. The phase adjusting amount is transmitted from the user terminal 30 being the destination of the generated DL data signal, and is included in an UL control signal demodulated by the UL control signal demodulator 212.

In generating a DL data signal destined for the user terminal 30 using a local cell of the base station 20 as the serving cell, the DL data signal generator 203 generates a DL data signal by, as denoted in Expression 1, carrying out a precoding process accompanying phase adjustment. Thereby, the phase of the wireless signal on the complex plane is adjusted. Namely, the serving-cell phase being the phase of a wireless signal transmitted through the serving cell on the complex plane is adjusted.

Furthermore, the wireless signal transmitted through the serving cell and the wireless signal transmitted through the coordinated cell are combined in the outside space and then received by the user terminal 30. Accordingly, this can be said that the phase of a wireless signal transmitted through the serving cell on the complex plane is adjusted on the basis of a wireless signal transmitted through the reference coordinated cell such that the receiving power of the combined wireless signal received by the user terminal 30 becomes larger.

$$(\text{Expression 1})$$

$$\mathbf{y} = \exp(j\phi)\mathbf{W} \cdot \mathbf{x}$$

Here, the symbol y represents a DL data signal representing a column vector formed of modulation symbols as many as the physical antenna number. The symbol x represents an unsettled data signal representing a column vector formed of modulation symbols as many as the data stream number set in accordance with the communication state. The symbol W represents a precoding matrix. The symbol j represents an imaginary number. The symbol $\varphi$ represents a phase adjusting amount.

As the above, this can be said that the DL data signal generator 203 controls the execution of the CoMP communication such that the phase on the complex plane that the wireless signal transmitted through the serving cell has is adjusted on the basis of a wireless signal transmitted though the reference coordinated cell using the phase adjusting amount contained in the received UL control information.

In contrast, in generating a DL data signal destined for a user terminal 30 using the local cell as a coordinated cell, the DL data signal generator 203 carries out the precoding process not accompanying phase adjustment, and thereby generates a DL data signal. Consequently, the phase, on the complex plane, of the wireless signal is not adjusted in this case.

$$(\text{Expression 2})$$

$$\mathbf{y} = \mathbf{W} \cdot \mathbf{x}$$

The physical channel multiplexer 204 multiplexes the DL reference signal generated by the DL reference signal generator 201, the DL control signal generated by the DL control signal generator 202, and the DL data signal generated by the DL data signal generator 203. The physical channel multiplexer 204 outputs the signal (baseband signal) obtained by the multiplexing.

The IFFT processor 205 carries out an Inverse Fast Fourier Transform (IFFT) process on the baseband signal output from the physical channel multiplexer 204, so that the baseband signal is converted from the frequency domain to a time domain.

The transmission RF processor 206 converts the baseband signal converted by the IFFT processor 205 into a wireless signal, and then outputs the converted wireless signal to the transmission antenna 207.

The transmission antenna 207 transmits the wireless signal output from the transmission RF processor 206 to the outside space via the antenna.

The receiving antenna 208 receives a wireless signal propagating the outside space via the antenna, and outputs the received wireless signal to the receiving RF processor 209.

The receiving RF processor 209 converts the wireless signal output from the receiving antenna 208 into a baseband signal.

The UL channel estimator 210 estimates a state of an uplink channel (UL channel state) for each user terminal 30 on the basis of an UL reference signal included in the baseband signal output from the receiving RF processor 209. Specifically, the UL channel estimator 210 estimates the UL channel state by estimating a transfer function of an uplink channel (communication path or propagating path) between the user terminal 30 and the base station 20.

Furthermore, as described above, the communication system 1 of the present example carries out time-division duplex (TDD) to multiplex downlink (DL) signals and uplink (UL) signals. Accordingly, it is estimated that the DL channel state and the UL channel state between the base station 20 and the user terminal 30 are symmetrical with respect to each other. On the basis of the estimation, the communication system 1 uses the UL channel state to control a DL signal.

The precoding selector 211 selects a precoding matrix for each user terminal 30 on the basis of the precoding type and the UL channel state (UL channel estimated value) estimated by the UL channel estimator 210. In the present example, the precoding selector 211 selects a precoding matrix for each user terminal 30 among candidate precoding matrices stored in advance on the basis of a precoding type determined for the user terminal 30.

A precoding type is determined for a user terminal 30 by the precoding type determiner 214 of a base station 20 providing a cell that the user terminal 30 uses as the serving cell. A precoding type of a user terminal 30 that uses the local cell as a coordinated cell is determined by a base station (serving base station) 20 that provides the serving cell of the user terminal 30. This means that, when the serving base station 20 of a user terminal 30 is another base station, the precoding type is received from the other base station.

The UL control signal demodulator 212 demodulates an UL control signal from the received wireless signal.

The coordinated TP determiner 213 determines multiple coordinated cells (Coordinated TPs (Transmission Points)) for each user terminal 30 that uses the local cell as the serving cell on the basis of RSRP information. The RSRP information is transmitted from the user terminal 30 that is the target for the determination and the RSRP information is contained in the UL control signal demodulated by the UL control signal demodulator 212. The RSRP information is information which associates a cell identifier to identify the cell and a Reference Signal Received Power (RSRP) of a reference signal through the cell with each other.

In the present example, the coordinated TP determiner 213 determines a cell having an RSRP larger than a predetermined threshold as a coordinated cell. Furthermore, the coordinated TP determiner 213 may be configured to determine a predetermined number of cells as the coordinated cells. In this case, it is preferable that the coordinated TP determiner 213 preferentially determines, as the coordinated cells, cells having a larger RSRP.

The coordinated TP determiner 213 generates coordinated TP information representing the determined coordinated cells for each user terminal 30 that uses the local cell as the serving cell. In the present example, the coordinated TP information includes a cell identifier that identifies each coordinated cell and information to specify the reference coordinated cell among the coordinated cells.

On the basis of the RSRP information and the coordinated TP information, the precoding type determiner 214 selects a reference coordinated cell for each user terminal 30 using the local cell as the serving cell among the multiple coordinated cells. In the present example, the precoding type determiner 214 selects a predetermined number (here, one) of reference coordinated cells.

In other words, if the number of determined coordinated cells exceeds the number of reference coordinated cells, the precoding type determiner 214 selects part of the determined coordinated cells as the reference coordinated cells. In contrast, if the number of determined coordinated cells is equal to the number of reference coordinated cells, the precoding type determiner 214 selects all of the determined coordinated cells as the reference coordinated cells.

A reference coordinated cell is a coordinated cell that is the reference to adjust the serving-cell phase. The serving-cell phase is a phase on the complex plane that a wireless signal transmitted through the serving cell has.

The RSRP information is included in an UL control signal, which is sent from the user terminal 30 that is the target for the selection, and which is demodulated by the UL control signal demodulator 212. The coordinated TP information is generated by the coordinated TP determiner 213 for the user terminal 30 that is the target for the selection.

Specifically, the precoding type determiner 214 preferentially selects, as a reference coordinated cell, a coordinated cell having a larger RSRP. This means that, in the present example, the precoding type determiner 214 selects the coordinated cell having the largest RSRP as a reference coordinated cell.

The precoding type determiner 214 determines a precoding type applied to each of the multiple cells of the serving cell and the coordinated cells for each user terminal 30 using the local cell as the serving cell on the basis of the RSRP information and the coordinated TP information. The RSRP information is transmitted from the user terminal 30 that is the target for the determination, and is included in the UL control signal demodulated by the UL control signal demodulator 212. The coordinated TP information is generated by the coordinated TP determiner 213 for the user terminal 30 that is the target for the determination.

The precoding type determiner 214 generates, for each user terminal 30 using the local cell as the serving cell, precoding type information in which a cell identifier that identifies the cell is associated with the determined precoding type of the cell.

A precoding type is a manner used for selecting the precoding matrix. A precoding type of the present example is an Adaptive Type or a Non-Adaptive type.

The Adaptive Type is a manner such that a precoding matrix is changed according to a communication state of a cell. The Non-Adaptive Type is a manner such that a precoding matrix is not changed according to a communication state of a cell. In the present example, the Non-Adaptive Type is a random manner such that a current precoding matrix is changed to one of predetermined precoding matrices at a periodic cycle of changing. Alternatively, the Non-Adaptive Type may be such that a predetermined single precoding matrix is used without change.

In the present example, the precoding type determiner 214 adopts the Adaptive Type to the precoding type for each of the serving cell and the reference coordinated cell. The precoding type determiner 214 adopts the Non-Adaptive Type to the precoding type for each non-reference coordinated cell. A non-reference coordinated cell is among the multiple coordinated cells and are except for the reference coordinated cell.

The scheduler 215 determines whether or not a CoMP condition is satisfied with respect to each user terminal 30 using the local cell as serving cell. The scheduler 215 outputs CoMP information to the DL control signal generator 202 so that the CoMP information is transmitted to each user terminal 30 satisfying the CoMP condition.

The CoMP information includes coordinated TP information generated by the coordinated TP determiner 213 and the precoding type information generated by the precoding type determiner 214. In the present example, the CoMP information further includes data transmission timing information representing a timing (data transmission timing) when CoMP information is executed and wireless resource information representing a wireless resource to be used for executing the CoMP communication.

In addition, the scheduler 215 transmits the CoMP information to each base station (coordinated base station) 20 having a cell that each user terminal 30 for which a CoMP condition is satisfied uses as a coordinated cell.

In the present example, the precoding type information included in the CoMP information is an example of a manner instruction that instructs the coordinated base station 20 having the reference coordinated cell to adopt the Adaptive Type to the reference coordinated cell. The precoding type information included in the CoMP information is also an example of a manner instruction that instructs each coordinated base station 20 having a non-reference coordinated cell to adopt the Non-Adaptive Type to the non-reference coordinated cell.

Furthermore, in the present example, data to be transmitted to the user terminal 30 in the CoMP communication is transmitted from the serving base station 20 to each coordinated base station 20 along with the CoMP information. Alternatively, data to be transmitted to the user terminal 30 in the CoMP communication may be directly transmitted from the exchange station 10 to each coordinated base station 20.

The scheduler 215 receives CoMP information from a base station (serving base station) 20 of each user terminal 30 that uses the local cell as a coordinated cell.

As illustrated in FIG. 5, the function of a user terminal 30 includes a UL reference signal generator 301, a UL control signal generator 302, a physical channel multiplexer 303, a transmission RF processor 304, a transmission antenna 305, a receiving antenna 306, a receiving RF processor 307, an FFT processor 308, a DL data signal demodulator 309, a DL control signal demodulator 310, a DL channel estimator 311, a precoding selector 312, a phase adjusting amount calculator 313, and an RSRP calculator 314.

In the present example, the transmission RF processor 304 through the receiving RF processor 307 are achieved by the wireless communication device 31 and the wireless signal processor 32. Also the UL reference signal generator 301 through the physical channel multiplexer 303 and the FFT processor 308 through the RSRP calculator 314 are achieved by the digital signal processor 33.

The RSRP calculator 314 is an example of a communication state obtainer. And the phase adjusting amount calculator 313 is an example of an adjusting parameter obtainer. And the UL control signal generator 302, the physical channel multiplexer 303, the transmission RF processor 304, and the transmission antenna 305 comprehensively serve as an example of a transmitter.

The UL reference signal generator 301 generates an uplink (UP) reference signal. An uplink reference signal is also referred to as an UL reference signal. The UL reference signal of the present example is a Sounding RS (SRS).

The UL control signal generator 302 generates an uplink control signal (UL control signal). For example, the control information that the UL control signal represents includes RSRP information, a phase adjusting amount, a confirmation (i.e., ACK or NACK) of reception of downlink transmission, the quality of downlink reception, and a request for allocating a wireless resource. ACK is an abbreviation of Acknowledgement. NACK is an abbreviation of Negative Acknowledgement.

The physical channel multiplexer 303 multiplexes the UL reference signal generated by the UL reference signal generator 301 and the UL control signal generated by the UL control signal generator 302. The physical channel multiplexer 303 outputs the multiplexed signal (baseband signal).

The transmission RF processor 304 converts the baseband signal output from the physical channel multiplexer 303 into a wireless signal, and outputs the converted wireless signal to the transmission antenna 305.

The transmission antenna 305 transmits the wireless signal output from the transmission RF processor 304 to the outside space via an antenna.

The receiving antenna 306 receives a wireless signal propagating the outside space via an antenna, and outputs the received wireless signal to the receiving RF processor 307.

The receiving RF processor 307 converts the wireless signal received from the receiving antenna 306 to the baseband signal.

The FFT processor 308 carries out a Fast Fourier Transform (FTT) process on the baseband signal converted by the receiving RF processor 307, so that the baseband signal is converted from a time domain to a frequency domain 1.

The DL data signal demodulator 309 demodulates a DL data signal from the baseband signal converted by the FFT processor 308.

The DL control signal demodulator 310 demodulates a DL control signal from the baseband signal converted by the FFT processor 308.

The DL channel estimator 311 estimates a downlink channel state (DL channel state) of each cell accommodating the position of the user terminal 30 on the basis of the DL reference signal included in the baseband signal converted by the FFT processor 308. Specifically, the DL channel estimator 311 estimates the DL channel state by estimating a transfer function of a downlink channel between the local terminal (user terminal) 30 and the base station 20 for each cell.

The precoding selector 312 selects, if the DL control signal demodulated by the DL control signal demodulator 310 includes CoMP information, a precoding matrix based on the CoMP information. Specifically, the precoding selector 312 selects a precoding matrix for each of the serving cell and the coordinated cells on the basis of the precoding type associated with the cell and the DL channel state (DL channel estimated value) of the cell. The precoding type is represented by the precoding type information included in the CoMP information and the DL channel state is estimated by the DL channel estimator 311.

The precoding selector 312 selects a precoding matrix in accordance with the same algorithm that the precoding selector 211 uses. This means that the precoding selector 211 and the precoding selector 312 select the same precoding matrix for a cell having the same precoding type when the estimated UL channel value and the DL channel estimated value coincide.

The phase adjusting amount calculator 313 calculates (obtains), when the DL control signal demodulated by the DL control signal demodulator 310 includes the CoMP information, a phase adjusting amount on the basis of the CoMP information and the precoding matrix selected by the precoding selector 312. A phase adjusting parameter here is an example of an adjusting parameter to adjust the serving-cell phase. In the present example, the phase adjusting amount calculator 313 calculates a phase adjusting amount using Expression 3 below.

$$(\text{Expression } 3)$$

$$\phi_0 = \arg \max_{\phi_0} \left[ \text{capacity} \{ \mathbf{H_0} \cdot \mathbf{W_0} \exp(j\phi_0) + \mathbf{H_1} \cdot \mathbf{W_1} \} \right]$$

The symbol $\varphi_0$ represents a phase adjusting amount. The term "capacity" represents a function to calculate a communication path capacity. A communication path capacity is the upper limit of data volume that the CoMP communication can transmit per unit time. The symbol $H_0$ represents an estimated DL channel state for the connecting cell. The symbol Wo represents a precoding matrix selected for the connecting cell. The symbol $H_1$ represents an estimated DL channel state for the reference coordinated cell. The symbol $W_1$ represents a precoding matrix selected for the reference coordinated cell.

The symbol $\varphi_0$ represents a phase adjusting amount. The term "capacity" represents a function to calculate a communication path capacity. A communication path capacity is the upper limit of data volume that the CoMP communication can transmit per unit time. The symbol $H_0$ is a matrix representing an estimated DL channel state for the serving cell. The symbol Wo represents a precoding matrix selected for the serving cell. The symbol $H_1$ is a matrix representing an estimated DL channel state for the reference coordinated cell. The symbol $W_1$ represents a precoding matrix selected for the reference coordinated cell.

Here, a channel (wireless channel) exists for each combination of an antenna of a base station 20 and the antenna of a user terminal 30. Accordingly, providing that the base station 20 includes M antennas and the user terminal 30 includes N antennas, for example, MxN wireless channels exist. Hence each of $H_0$ and $H_1$ is represented by an $M \times N$ matrix.

Accordingly, it can be said that the phase adjusting amount calculator 313 obtains the phase adjusting amount based on a wireless signal received through the reference coordinated cell and a wireless signal received through the serving cell.

Furthermore, it can be said that the phase adjusting amount calculator 313 obtains, when the CoMP communication is assumed to be carried out only by a serving cell and a reference coordinated cell, the phase adjusting amount that maximizes the communication path capacity of the CoMP communication.

The phase adjusting amount calculator 313 outputs the calculated phase adjusting amount to the UL control signal generator 302.

The RSRP calculator 314 calculates (obtains) an RSRP of each cell accommodating the position of the local user terminal 30 on the basis of the DL control signal and the DL channel state. An RSRP is an example of a communication state parameter representing a communication state of a cell. The DL control signal is demodulated by the DL control signal demodulator 310 on the basis of a wireless signal transmitted through a cell that is the target of the calculation. The DL channel state is estimated by the DL channel estimator 311 on the basis of a wireless signal transmitted through a cell that is the target of the calculation.

The RSRP calculator 314 generates RSRP information for each cell accommodating the position of the local user terminal 30 by associating the cell identifier that identifies the cell with an RSRP calculated for the cell. The RSRP calculator 314 outputs the generated RSRP information to the UL control signal generator 302.

Furthermore, while in the present example, the communication system 1 uses an RSRP as a communication state parameter, the communication system 1 may use an SINR, a path loss, a CQI, an RSRQ, or the number of antennas that each base station 20 includes (an antenna number). SINR is an abbreviation of Signal to Interference plus Noise Power Ratio. CQI is an abbreviation of Channel Quality Indicator. RSRQ is an abbreviation of Reference Signal Received Quality. The communication system 1 may use an arbitrary combination of an RSRP, an SINR, a Path Loss, a CQI, RSRQ, and an antenna number as the communication state parameter.

(Operation)

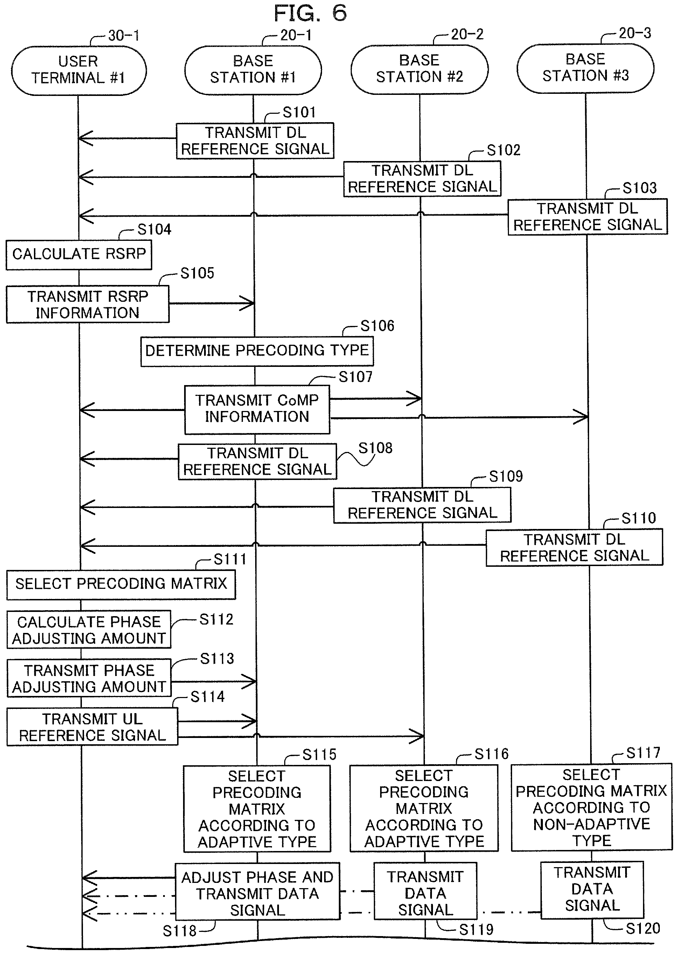

Next, description will now be made in relation to the operation of the communication system 1 with reference to FIGs. 6-10. The description here focuses on the operation of a single user terminal #1. The communication system 1 operates the same as the following for other user terminals 30.

The present example assumes that the position of the user terminal #1 is accommodated in a cell provided by a base station #1, a cell provided by a base station #2, and a cell provided by a base station #3, and the user terminal #1 uses the cell provided by the base station #1 as the serving cell. The present example further assumes that a CoMP condition is satisfied.

Each base station 20 transmits a DL reference signal each time a predetermined transmission period of a DL reference signal elapses.

Similarly, the each user terminal 30 transmits a UL reference signal each time a predetermined transmission period of an UL reference signal elapses.

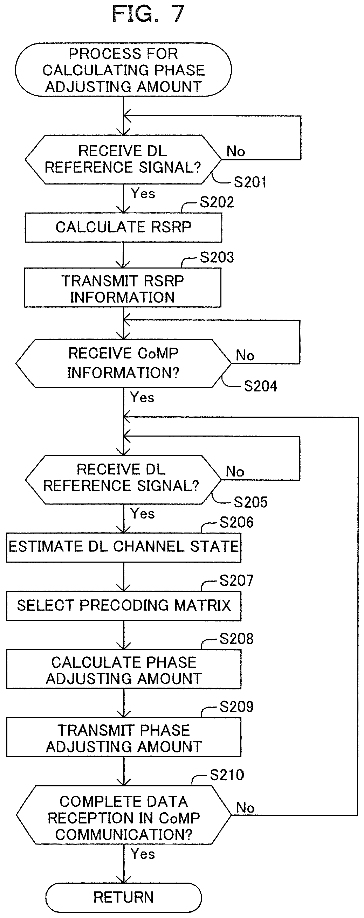

Furthermore, the user terminal #1 carries out a process of calculating a phase adjusting amount along the flow diagram FIG. 7. Specifically, after starting the execution of the process of calculating a phase adjusting amount, the user terminal #1 is on standby until the user terminal #1 receives a DL reference signal through each of the cells accommodating the local terminal 30-1 (step S201 of FIG. 7).

Then, the user terminal #1 receives a DL reference signal in each cell (steps S101-S103 of FIG. 6). Thereby, the user terminal #1 determines "YES" and calculates an RSRP of each cell (step S104 of FIG. 6, step S202 of FIG. 7). Next, the user terminal #1 generates an RSRP information and transmits the generated RSRP information to the serving base station #1 (step S105 of FIG. 6, step S203 in FIG. 7). Then the user terminal #1 is on standby until receiving CoMP information from the serving base station (step S204 of FIG. 7).

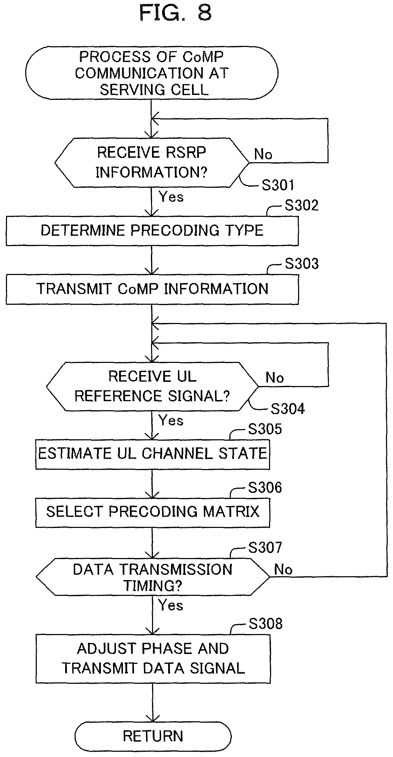

On the other hand, the serving base station #1 carries out a process of CoMP communication along the flow diagram FIG. 8. Specifically, after starting the execution of the process of CoMP communication of the serving cell, the serving base station #1 is on standby until receiving RSRP information (step S301 of FIG. 8). Upon receipt of RSRP information, the serving base station #1 determines "YES" and determines a coordinated cell. The present example assumes that a cell provided by the base station #2 and a cell provided by the base station #3 are determined to be coordinated cells.

Furthermore, the serving base station #1 selects a reference coordinated cell from the determined coordinated cells. The present example assumes that a cell provided by the base station #2 is selected as a reference coordinated cell. In addition, the serving base station #1 determines a precoding type for each of the serving cell and the coordinated cell (step S106 of FIG. 6, step S302 of FIG. 8).

As described above, in the present example, the serving base station #1 determines a precoding type for each of the serving cell (provided by the local station 20-1) and the reference coordinated cell (provided by the base station #2) to be the Adaptive Type. Furthermore, the serving base station #1 determines the Non-Adaptive Type for the precoding type of the non-reference coordinated cell (provided by the base station #3).

And, the serving base station #1 transmits the CoMP information including information representing the coordinated cells, the reference coordinated cell, and the respective precoding types to the user terminal #1 and the coordinated base stations (base station #2 and the base station #3) (step S107 of FIG. 6, step S303 of FIG. 8). Then, the serving base station #1 is on standby until receiving an UL reference signal (step S304 of FIG. 8).

On the other hand, upon receipt of CoMP information, the user terminal #1 determines "Yes" in step S204 of FIG. 7 and comes into standby until receiving a DL reference signal (step S205 of FIG. 7).

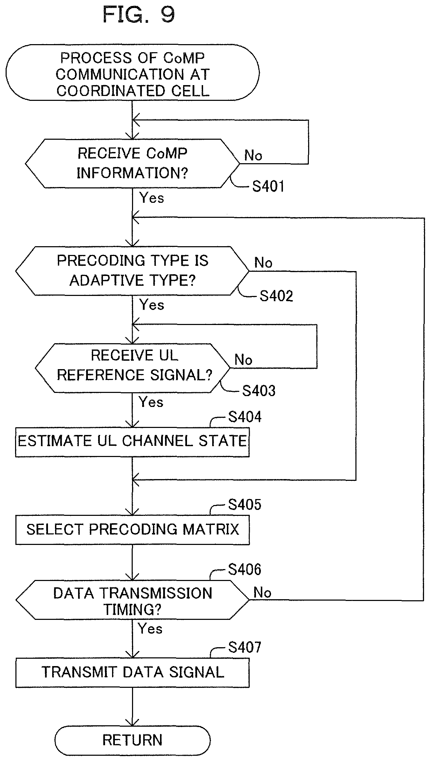

In addition, the coordinated base station #2 executes a process of CoMP communication at a coordinated cell along the flow diagram of FIG. 9. Specifically, upon starting the execution of the process of CoMP communication of a coordinated cell, the coordinated base station #2 comes into standby until receiving CoMP information (step S401 of FIG. 9). Upon receipt of the CoMP information from the serving base station #1, the coordinated base station #2 determines "Yes" and determines whether or not the precoding type determined for the cell that the coordinated base station #2 provides is the Adaptive Type (step S402 of FIG. 9).

In obedience to the above assumption, the coordinated base station #2 determines "Yes" and comes into standby until receiving an UL reference signal (step S403 of FIG. 9).

Likewise the coordinated base station #2, the coordinated base station #3 executes the process of CoMP communication of a coordinated cell of FIG. 9. The coordinated base station #3, for which the precoding type is determined to be the Non-Adaptive Type determines "No" in step S402 of FIG. 9 and moves to step S405 of FIG. 9.

Then, the coordinated base station #3 selects a precoding matrix according to the Non-Adaptive Type (step S117 of FIG. 6, step S405 of FIG. 9). Then, the coordinated base station #3 determines whether or not the timing (data transmission timing) represented by the data transmission timing information included in the CoMP information has come (step S406 of FIG. 9). If the data transmission timing has not come yet, the coordinated base station #3 returns to step S402 and carries out steps S402 to S406 again.

After that, the user terminal #1 receives a DL reference signal through each cell again (steps S108-S110 of FIG. 6). Thereby, the user terminal #1 determines "Yes" in step S205 of FIG. 7 and estimates a DL channel state of each cell (step S206 of FIG. 6).

Next, the user terminal #1 selects a precoding matrix for each cell on the basis of a DL channel state and a precoding type represented by precoding type information included in the CoMP information (step S111 of FIG. 6, step S207 of FIG. 7).

And, the user terminal #1 calculates a phase adjusting amount based on the precoding matrix and the DL channel state of the serving cell and the precoding matrix and the DL channel state of the reference coordinated cell (step S112 of FIG. 6, step S208 of FIG. 7). In succession, the user terminal #1 transmits the calculated phase adjusting amount to the serving base station #1 (step S113 of FIG. 6, step S209 of FIG. 7).

Then, the user terminal #1 repeats steps S205 to S210 of FIG. 7 until reception of data signals in the CoMP communication is completed. Finally, upon completion of the reception of data signals in the CoMP communication, the user terminal #1 determines "Yes" in step S210 in FIG. 7 and ends the process of calculating a phase adjusting amount.

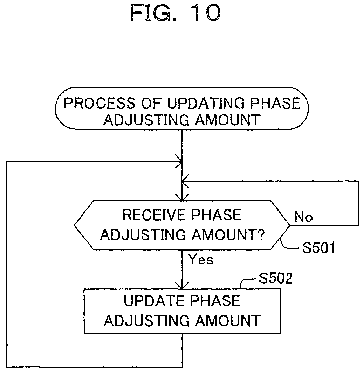

On the other hand, the serving base station #1 executes a process of updating the phase adjusting amount along the flow diagram of FIG. 10. Specifically, after starting the execution of the process of updating the phase adjusting amount, the serving base station #1 is on standby until receiving a phase adjusting amount (step S501 of FIG. 10). Upon receipt of a phase adjusting amount from the user terminal #1, the serving base station #1 determines "Yes" and updating the phase adjusting amount stored therein to the received phase adjusting amount (i.e., the newest phase adjusting amount) (step S502 of FIG. 10). Then the serving base station #1 returns to step S501 and repeats steps S501 and S502.

After the user terminal #1 transmits an UL reference signal (step S114 of FIG. 6), the base station #1 and the base station #2 receive the UL reference signal from the user terminal #1.

Consequently, the serving base station #1 determines "Yes" in step S304 of FIG. 8 and estimates the UL channel state of the serving cell (step S305 of FIG. 8).

And, the serving cell #1 selects a precoding matrix based on the estimated UL channel state and the precoding type (i.e., the Adaptive Type) determined for the local cell (step S115 of FIG. 6, step S306 of FIG. 8). Next, the serving cell #1 determines whether or not the data transmission timing has come (step S307 of FIG. 8). If the data transmission timing has not come yet, the serving base station #1 returns to step S304 and executes steps S304-S307 again.

On the other hand, the coordinated base station #2 determines "Yes" in step S403 of FIG. 9 and estimates a UL channel state of the reference coordinated cell (step S404 of FIG. 9). Then the coordinated base station #2 selects a precoding matrix based on the estimated UL channel state and the precoding type (i.e., the Adaptive Type) determined for the local cell (step S116 of FIG. 6, step S405 of FIG. 9).

Next, the coordinated base station #2 determines whether or not the data transmission timing has come (step S406 of FIG. 9). If the data transmission timing has not come yet, the coordinated base station #2 returns to step S402 and executes steps S402 to S406 again.

After that, when the data transmission timing has come, the serving base station #1 determines "Yes" in step S307 of FIG. 8. Then, the serving base station #1 transmits, to the user terminal #1, the DL data signal generated through a precoding process accompanying phase adjustment using the newest phase adjusting amount stored therein (step S118 of FIG. 6, step S308 of FIG. 8). After that the serving base station #1 ends the process of the CoMP communication of a serving cell of FIG. 8.

In addition, when the data transmission timing has come, the coordinated base station #2 determines "Yes" in step S406 of FIG. 9. Then, the coordinated base station #2 transmits, to the user terminal #1, a DL data signal generated through a precoding process not accompanying phase adjustment (step S119 of FIG. 6, step S407 of FIG. 9).

Likewise, when the data transmission timing has come, the coordinated base station #3 determines "Yes" in step S406 of FIG. 9. Then, the coordinated base station #3 transmits, to the user terminal #1, a DL data signal generated through a precoding process not accompanying phase adjustment (step S120 of FIG. 6, step S407 of FIG. 9).

Along the above processes, the user terminal #1 receives DL data signals transmitted from the base station #1, the base station #2, and the base station #3 in conformity with the CoMP communication.

Furthermore, the communication system 1 is preferably configured to repeat the transmission of DL data signals in the CoMP communication as long as a CoMP condition is satisfied.

Furthermore, the operation of the communication system 1 has been described as the above on an assumption that multiple base stations 20 each include a single cell (serving cell or coordinated cell). Furthermore, the same description is applied to cases where a single base station 20 includes both the serving cell and the coordinated cell and where a single base station 20 includes two or more coordinated cells.

In addition, the above description has been made in relation to an example in which a second process (steps S114-S117 of FIG. 6) of from the transmission of an UL reference signal to the selection of a precoding matrix is carried out after a first process (steps S108-S113 of FIG. 6) of from the transmission of a DL reference signal to the transmission of a phase adjusting amount. Alternatively, the same description can be applied to cases where the first process is carried out after the second process.

As described above, the communication system 1 of the first embodiment selects a reference coordinated cell serving as a reference to adjust the serving-cell phase from multiple coordinated cells. Furthermore, the user terminal 30 obtains an adjusting parameter (in the present example, a phase adjusting amount) to adjust the serving-cell phase on the basis of a wireless signal received through the selected reference coordinated cell and a wireless signal received through the serving cell. In addition, the user terminal 30 transmits control information containing the obtained adjusting parameter to the serving base station 20. In addition, upon receipt of the control information, the serving base station 20 controls execution of the CoMP communication such that the serving-cell phase is adjusted on the basis of the adjusting parameter contained in the received control information.

This makes it possible to adjust the serving-cell phase, without exchanging of information to adjust the phase on the complex plane that a wireless signal has, between the serving base station 20 and another base station 20. Consequently, even when the communication state of each cell fluctuates in a relatively short time span, this can avoid degrading of the receiving quality of the user terminal 30.

Furthermore, in the communication system 1 of the first embodiment, each of the multiple cells transmits a wireless signal after being subjected to the precoding process using a precoding matrix to the user terminal 30. In addition, the communication system 1 uses the Adaptive Type for a reference coordinated cell and the Non-Adaptive Type for a non-reference coordinated cell.

As described above, the serving-cell phase is adjusted on the basis of the wireless signals that the user terminal 30 receives through the reference coordinated cell and the serving cell. This makes it possible to properly adjust the serving-cell phase even when a precoding matrix of the reference coordinated cell is varied due to the communication state. As a result, the receiving quality of the user terminal 30 can be prevented from lowering.

In the communication system 1 of the first embodiment, the Non-Adaptive Type is one that changes the current precoding matrix to one of predetermined precoding matrices at a predetermined periodic cycle of changing.

For example, even if a precoding matrix for a non-reference coordinated cell is changed according to the communication state, a predetermined precoding matrix is used unchanged during a time period in which the communication state little changes. Here, a non-reference coordinated cell is a coordinated cell other than the reference coordinated cell. During this time period, if the receiving quality of the user terminal 30 excessively degrades due to the difference between a non-reference-coordinated-cell phase and the serving-cell phase, the state where the receiving quality of the user terminal 30 is excessively low continues for a relatively long time. However, the above configuration can avoid continuing a state where the receiving quality of the user terminal 30 is excessively low.

Further, the communication system 1 according to the first embodiment obtains a communication state parameter (in the present example, an RSRP) representing the state of the communication in each of the multiple cells. And on the basis of the obtained communication state parameters of the respective cells, the communication system 1 selects the reference coordinated cell.

By the way, the better a communication state of a coordinated cell is, the more the receiving quality of the user terminal 30 is affected by the difference between a phase (coordinate-cell phase) on the complex plane of a wireless signal and the serving cell phase. Accordingly, in the communication system 1 configured as the above, selecting a coordinated cell having a relatively good communication state as the reference coordinated cell can avoid degrading the receiving quality of the user terminal 30.

In addition, the communication system 1 uses an RSRP as a communication state parameter and preferentially selects a coordinated cell having a larger RSRP as a reference coordinated cell.

Here, the difference between a phase of a coordinated cell having a larger RSRP and the serving-cell phase more affects the receiving quality of the user terminal 30. Accordingly, the communication system 1 configured as the above can avoid degrading the receiving quality of the user terminal 30.

Further, the communication system 1 of the first embodiment selects a single coordinated cell as the reference coordinated cell. And the communication system 1 obtains, assuming that CoMP communication is executed only by the serving cell and the reference coordinated cell, an adjusting parameter that maximizes the communication path capacity of the CoMP communication.

This can increase the communication path capacity of actual CoMP communication.

Furthermore, in the communication system 1 of the first embodiment, the number of reference coordinated cells may be varied on the basis of at least one of each communication state parameter and the number of coordinated cells. In this case, the number of reference coordinated cells are preferably increased as the number of coordinated cells increases. In addition, the number of reference coordinated cells is preferably increased as the RSRPs as communication parameter increase.

The influence of the difference between a non-reference-coordinated-cell phase and a serving-cell phase on the receiving quality of the user terminal 30 has a relatively strong correlation with each communication state of a cell or the number of coordinated cells. Accordingly, with the configuration of the communication system 1, the number of reference coordinated cells can be properly adjusted, so that it is possible to avoid degrading of the receiving quality of the user terminal 30.

Further, the communication system 1 of the first embodiment may be configured to adjust, when the serving base station 20 also provides a non-reference coordinated cell, a coordinated-cell phase in addition to the serving-cell phase. A coordinated-cell phase is a phase on the complex plane that the wireless signal transmitted though the non-reference coordinated cell has.

This makes it possible to adjust the coordinated-cell phase of a non-reference coordinated cell, without exchanging information to adjust a phase on the complex plane that a wireless signal has, between the serving base station 20 and another base station 20. Consequently, it is possible to avoid degrading of the receiving quality of the user terminal 30.

Further, the communication system 1 of the first embodiment is configured to execute a process to achieve CoMP communication for each individual user terminal 30. Alternatively, the communication system 1 may be configured to execute a process to achieve CoMP communication for each individual Resource Block (RB) representing a unit of a wireless resource allocated to a user terminal 30.

In addition, in the communication system 1 of the first embodiment, the base station 20 may include an RRH (Remote Radio Head) and be configured to form a cell by the RRH.

In addition, in the communication system 1 of the first embodiment, both the user terminal 30 and the serving base station 20 select precoding matrices. Alternatively, one of the user terminal 30 and the serving base station 20 may select a precoding matrix and notify the selected precoding matrix to the other. In this case, it is preferable that one of the user terminal 30 and the serving base station 20 sends the other information (e.g., Precoding Matrix Indicator (PMI)) to specify the selected precoding matrix to the other.

Second embodiment:

Next, description will now be made in relation to a communication system according to a second embodiment. The communication system of the second embodiment is different from that of the first embodiment in the point that two or more coordinated cells are selected as reference coordinated cells. Hereinafter, the description will focus on the difference. Furthermore, like reference numbers in the second embodiment designate the same or the substantially same elements and parts detailed in the first embodiment.

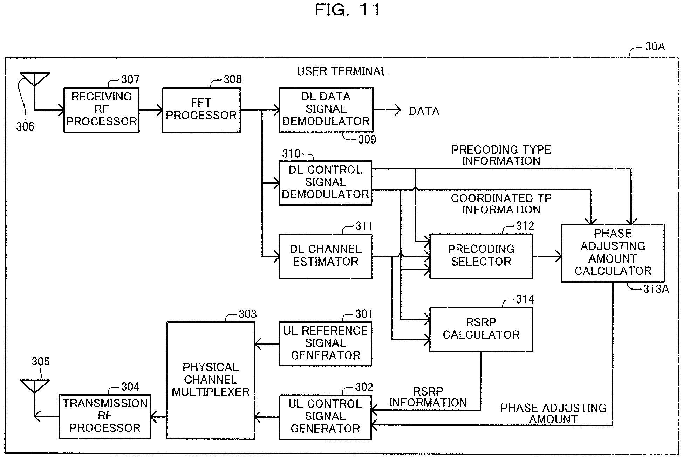

As illustrated in FIG. 11, the communication system 1 of the second embodiment includes a user terminal 30A in place of the user terminal 30 of the first embodiment. The user terminal 30A has the function of a phase adjusting amount calculator 313A in place of the function of the phase adjusting amount calculator 313 of the user terminal 30 of the first embodiment.

In addition, in the second embodiment, the precoding type determiner 214 selects N coordinated cells as reference coordinated cells, N representing a value of two or more.

The phase adjusting amount calculator 313A uses a different expression from that used by the phase adjusting amount calculator 313 to calculate a phase adjusting amount, but has the remaining function the same as that of the phase adjusting amount calculator 313. Specifically, the phase adjusting amount calculator 313A uses Expression 4 in place of Expression 3 to calculate a phase adjusting amount $\varphi_0$.

(Expression 4)

$$\phi_0 = \arg\max_{\phi_0}\left[ \text{capacity}\left\{ \mathbf{H_0} \cdot \mathbf{W_0} \exp(j\phi_0) + \sum_{i=1}^{N} \mathbf{H}_i \cdot \mathbf{W}_i \right\} \right]$$

The symbol $H_i$ represents a matrix representing a DL channel state estimated for the i-th reference coordinated cell. The symbol $W_i$ represents a precoding matrix selected for the i-th reference coordinated cell. Here, the symbol i represents an integer of 1 to N. N represents the number of reference coordinated cells.

This means that the phase adjusting amount calculator 313A obtains a phase adjusting amount that maximizes the communication path capacity of the CoMP communication assuming that the CoMP communication is executed only by the serving cell and the reference coordinated cells.

The communication system 1 having the above configuration brings the same effects and advantages as those of the communication system 1 of the first embodiment.

Here, precoding type determiner 214 is configured to determine the precoding type of each reference coordinated cell to be the Adaptive Type. Alternatively, the precoding type determiner 214 may determine the precoding type of one of the reference coordinated cells to be the Adaptive Type while determine the precoding type of the remaining reference coordinated cells to be a random type.

In this case, the phase adjusting amount calculator 313A preferably uses an expression in which the term $H_i \cdot W_i$ on the right side of Expression 4 is replaced by the term of Expression 5 corresponding to the reference coordinated cells whose precoding type is determined to be applied the random type in place of Expression 4.

$$(\text{Expression 5})$$

$$\frac{1}{M}\sum_{k=1}^{M}\mathbf{H}_i \cdot \mathbf{W}_{i,k}$$

Here, the symbol $W_{i,k}$ represents a k-th precoding matrix among multiple precoding matrices selected in the random type. The symbol M represents the total number of precoding matrices selected in the random type. That is, the term represented by Expression 5 corresponds to a time average value of a product of the DL channel state and the precoding matrix in reference coordinated cells using the random type.

Third embodiment:

Next, description will now be made in relation to the communication system according to a third embodiment. The communication system of the third embodiment is different from the communication system of the first embodiment in the point that two or more coordinated cells are selected as reference coordinated cells. Hereinafter, the description will focus on the difference. Furthermore, like reference numbers in the third embodiment designate the same or the substantially same elements and parts detailed in the first embodiment.

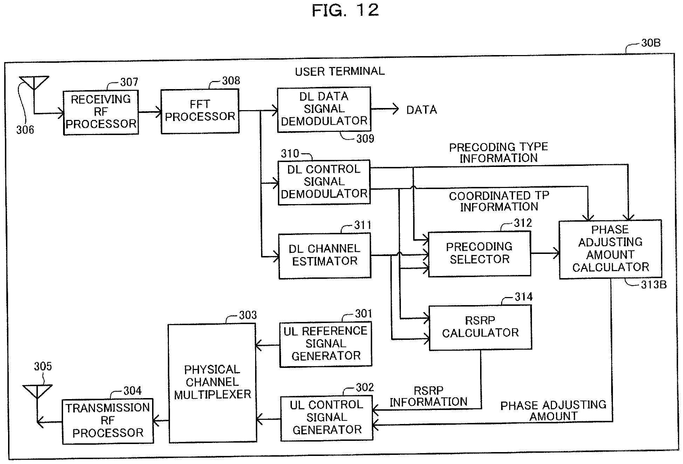

As illustrated in FIG. 12, the communication system 1 of the third embodiment includes a user terminal 30B in place of the user terminal 30 of the first embodiment. The user terminal 30B has the function of a phase adjusting amount calculator 313B in place of the function of the phase adjusting amount calculator 313 of the user terminal 30 of the first embodiment.

In addition, in the third embodiment, the precoding type determiner 214 selects N coordinated cells as reference coordinated cells, N representing a value of two or more.

The phase adjusting amount calculator 313B uses different expression from that used by the phase adjusting amount calculator 313 to calculate a phase adjusting amount, but has the remaining function the same as that of the phase adjusting amount calculator 313. Specifically, the phase adjusting amount calculator 313B uses Expressions 6 and 7 in place of Expression 3 to calculate a phase adjusting amount $\varphi_0$.

$$(\text{Expression 6})$$

$$\phi_0 = -\frac{\displaystyle\sum_{i=1}^{N} w_i \phi_i}{\displaystyle\sum_{i=1}^{N} w_i}$$

(Expression 7)

$$\phi_i = \arg\max_{\phi_i}\left[\text{capacity}\{\mathbf{H_0} \cdot \mathbf{W_0} + \mathbf{H}_i \cdot \mathbf{W}_i \exp(j\phi_i)\}\right]$$

The symbol $\varphi_i$ represents an unsettled phase adjusting amount of the i-th reference coordinated cell. An unsettled phase adjusting amount $\varphi_i$ is an example of an unsettled adjusting parameter that adjusts the serving-cell phase that maximizes the communication path capacity of the CoMP communication assuming that the CoMP communication is executed only by the serving cell and the i-th reference coordinated cell. The symbol $w_i$ represents a weighing coefficient applied to the i-th reference coordinated cell. Here the symbol i represents an integer of 1 to N. N represents the number of reference coordinated cells. The symbol Hi represents a matrix representing a DL channel state estimated for the i-th reference coordinated cell. The symbol $W_i$ represents a precoding matrix selected for the i-th reference coordinated cell.

In this embodiment, the weighing coefficients of the respective coordinated cells are set to be the same value. This means that Expression 6 represents a calculation of a simple average (i.e., arithmetic mean). Furthermore, in calculation of a weighted average, each weighing coefficient $w_i$ is preferably set on the basis of a communication state parameter of the corresponding reference coordinated cell. For example, a weighing coefficient $w_i$ is set to be larger as the RSRP increases.

It can be said that the phase adjusting amount calculator 313B obtains an unsettled phase adjusting amount $\varphi_i$ for each of the multiple reference coordinated cells. In addition, it can be said that the phase adjusting amount calculator 313B obtains the phase adjusting amount $\varphi_0$ based on the unsettled phase adjusting amounts $\varphi_i$ obtained for the respective reference coordinated cells.

The communication system 1 of the third embodiment having the above configuration brings the same effects and advantages as those of the communication system 1 of the first embodiment.

Furthermore, the user terminal 30B of the third embodiment is configured to send the phase adjusting amount $\varphi_0$ the serving base station 20. Alternatively, the user terminal 30B may be configured to send the unsettled phase adjusting amounts $\varphi_i$ to the serving base station 20. In this alternative, the serving base station 20 is configured to obtain the phase adjusting amount $\varphi_0$ using the unsettled phase adjusting amounts $\varphi_i$ received from the user terminal 30B and Expression 6. In other words, the unsettled phase adjusting amounts $\varphi_i$ can be regarded as an example of the adjusting parameter.

The embodiments of the present invention are described as the above, but various modifications and changes within the knowledge of those ordinarily skilled in the art can be suggested without departing from the present invention as defined by the appended claims.

Furthermore, in the foregoing embodiments, the functions of the respective devices (i.e. an exchange station, a base station, and a user terminal) are achieved by hardware such as a circuit. Alternatively, each device may include a computer having a processor and a memory device to store therein a program (software) and the functions of the device may be achieved by the processor executing the stored program. In this case, the program may be stored in a computer-readable recording medium exemplified by a portable medium such as a flexible disk, an optical disk, a magneto-optical disk, and a semiconductor memory.

Additional modification can be suggested by combining the foregoing embodiments, alternatives, and modifications without departing from the present invention as defined by the appended claims.

REFERENCE SIGNS LIST

| | |
|---|---|
| 1 | communication system |
| 10 | exchange station |
| 20 | base station |
| 21 | wireless communication device |
| 22 | wired communication device |
| 23 | wireless signal processor |
| 24 | digital signal processor |
| 201 | DL reference signal generator |
| 202 | DL control signal generator |
| 203 | DL data signal generator |
| 204 | physical channel multiplexer |
| 205 | IFFT processor |

| 206 | transmission RF processor |
|---|---|
| 207 | transmission antenna |
| 208 | receiving antenna |
| 209 | receiving RF processor |
| 210 | UL channel estimator |
| 211 | precoding selector |
| 212 | UL control signal demodulator |
| 213 | coordinated TP determiner |
| 214 | precoding type determiner |
| 215 | scheduler |
| 30, 30A, 30B | user equipment |
| 31 | wireless communication device |
| 32 | wireless signal processor |
| 33 | digital signal processor |
| 34 | input device |
| 35 | output device |
| 301 | UL reference signal generator |
| 302 | UL control signal generator |
| 303 | physical channel multiplexer |
| 304 | transmission RF processor |
| 305 | transmission antenna |
| 306 | receiving antenna |
| 307 | receiving RF processor |
| 308 | FFT processor |
| 309 | DL data demodulator |
| 310 | DL control data demodulator |
| 311 | DL channel estimator |
| 312 | precoding selector |
| 313, 313A, 313B | phase adjusting amount calculator |
| 314 | RSRP calculator |
| NW | network |

**Claims**

1. A communication system (1) comprising a user terminal (30) and a plurality of base stations (20), the communication system (1) carrying out CoMP (Coordinated Multi-Point) communication where a plurality of wireless signals are transmitted to the user terminal (30) through a plurality of cells including a serving cell and a plurality of coordinated cells except for the serving cell, the plurality of wireless signals containing the same data, the serving cell providing a wireless resource for exchanging control information to control communication between the user terminal (30) and the base stations (20), the communication system (1) further comprising:

   a selector (214) that selects a reference coordinated cell among the plurality of coordinated cells, the reference coordinated cell being a reference to adjust a serving-cell phase representing a phase on a complex plane that a wireless signal transmitted through the serving cell has,
   the user terminal (30) comprising

   an adjusting parameter obtainer (313) that obtains an adjusting parameter to adjust the serving-cell phase using the wireless signal received through the selected reference coordinated cell and the wireless signal received through the serving cell; and
   a transmitter (302, 303, 304, 305) that transmits the control information including the obtained adjusting parameter to a serving base station (20) that provides the serving cell and that is one of the plurality of base stations(20),

   the serving base station (20) comprising a controller (203, 215) that receives the control information and controls execution of the CoMP communication such that the serving-cell phase is adjusted on the basis of the adjusting parameter included in the received control information.

2. The communication system (1) according to claim 1, wherein
in each of the plurality of cells, the wireless signal obtained by a precoding process using a precoding matrix is transmitted to the user terminal(30); and wherein
the reference coordinated cell uses an adaptive type that varies the precoding matrix according to a communication state of a cell, and
non-reference coordinated cells each uses a non-adaptive type that does not vary the precoding matrix according to a communication state of a cell, the non-reference coordinated cells being the plurality of coordinated cells except for the reference coordinated cell among the plurality of the coordinated cells.

3. The communication system (1) according to claim 2, wherein the non-adaptive type varies the precoding matrix to one of a plurality of predetermined precoding matrices each time a periodic cycle of varying elapses.

4. The communication system (1) according to one of claims 1-3, further comprising a communication state obtainer (314) that obtains a communication state parameter representing a communication state of each of the plurality of cells, wherein
the selector (214) selects the reference coordinated cell on the basis of the communication state parameter obtained for each of the plurality of cells.

5. The communication system (1) according to claim 4, wherein the selector (214) uses an RSRP (Reference Signal Received Power) as the communication state parameter, and selects a coordinated cell having a larger RSRP as the reference coordinated cell.

6. The communication system (1) according to claim 5, wherein the selector (214) selects a coordinated cell having the largest RSRP as the reference coordinated cell.

7. The communication system (1) according to one of claims 1-6, wherein the selector (214) changes the number of coordinated cells being selected as reference coordinated cells on the basis of at least one of a communication state parameter representing a communication state of a cell and the number of the coordinated cells.

8. The communication system (1) according to one of claims 1-7, wherein:

the selector (214) selects two or more of the plurality of coordinated cells as two or more of the reference coordinated cells; and
the adjusting parameter obtainer (313) obtains, for each of the selected reference coordinated cells, an unsettled adjusting parameter that maximizes the communication path capacity of the CoMP communication when the CoMP communication is carried out by only the serving cell and the reference coordinated cell, to adjust the serving-cell phase, and obtains the adjusting parameter on the basis of the unsettled adjusting parameter obtained for each of the selected reference coordinated cells.

9. The communication system (1) according to one of claims 1-7, wherein:

the selector (214) selects two or more of the plurality of coordinated cells as two or more of the reference coordinated cells; and
the adjusting parameter obtainer (313) obtains, for each of the selected reference coordinated cells, the adjusting parameter that maximizes the communication path capacity of the CoMP communication when the CoMP communication is carried out by only the serving cell and the reference coordinated cell.

10. The communication system (1) according to one of claims 1-7, wherein:

the selector (214) selects two or more of the plurality of coordinated cells as two or more of the reference coordinated cells; and
the adjusting parameter obtainer (313) obtains the adjusting parameter that maximizes the communication path capacity of the CoMP communication when the CoMP communication is carried out by only the serving cell and the selected reference coordinated cells.

11. The communication system (1) according to one of claims 1-7, wherein:

the selector (214) selects only one coordinated cell as the reference coordinated cell; and

the adjusting parameter obtainer (313) obtains the adjusting parameter that maximizes the communication path capacity of the CoMP communication when the CoMP communication is carried out by only the serving cell and the selected reference coordinated cell.

**12.** The communication system (1) according to one of claims 1-11, wherein, when the serving base station (20) provides at least one non-reference coordinated cell being one of the plurality of coordinated cells except for the selected reference coordinated cell, a coordinated-cell phase on a complex plane that a wireless signal transmitted through each of the at least one non-reference coordinated cell has is adjusted in addition to the serving-cell phase.

**13.** A user terminal (30) for a communication system (1) comprising the user terminal (30) and a plurality of base stations (20), the communication system (1) carrying out CoMP (Coordinated Multi-Point) communication where a plurality of wireless signals are transmitted to the user terminal (30) through a plurality of cells including a serving cell and a plurality of coordinated cells except for the serving cell, the plurality of wireless signals containing the same data, the serving cell providing a wireless resource for exchanging control information to control communication between the user terminal (30) and the base stations (20), the user terminal (30) comprising:

an adjusting parameter obtainer (313) that obtains an adjusting parameter to adjust a serving-cell phase using the wireless signal received through the serving cell and the wireless signal received through a reference coordinated cell selected among the plurality of coordinated cells, the reference coordinated cell being selected as a reference to adjust the serving-cell phase representing a phase on a complex plane that a wireless signal transmitted through the serving cell has; and
a transmitter (302, 303, 304, 305) that transmits the control information including the obtained adjusting parameter to a serving base station (20) that provides the serving cell and that is one of the plurality of base stations (20).

**14.** A serving base station (20) for a communication system (1) comprising a user terminal (30) and a plurality of base stations (20), the communication system (1) carrying out CoMP (Coordinated Multi-Point) communication where a plurality of wireless signals are transmitted to the user terminal (30) through a plurality of cells including a serving cell and a plurality of coordinated cells except for the serving cell, the plurality of wireless signals containing the same data, the serving cell being provided by the serving base station (20) and providing a wireless resource for exchanging control information to control communication between the user terminal (30) and the base stations (20), the serving base station (20) comprising:

a selector (214) that selects a reference coordinated cell among the plurality of coordinated cells, the reference coordinated cell being a reference to adjust a serving-cell phase representing a phase on a complex plane that a wireless signal transmitted through the serving cell has; and
a controller (203, 215) that receives control information including an adjusting parameter to adjust the serving-cell phase, the adjusting parameter being obtained by the user terminal (30) using the wireless signal received through the selected reference coordinated cell and the wireless signal received through the serving cell, and controls execution of the CoMP communication such that the serving-cell phase is adjusted on the basis of the adjusting parameter included in the received control information.

**Patentansprüche**

**1.** Kommunikationssystem (1), das ein Benutzer-Endgerät (30) und mehrere Basisstationen (20) umfasst, wobei das Kommunikationssystem (1) CoMP (Coordinated Multi-Point) - Kommunikation ausführt, bei welcher mehrere drahtlose Signale durch mehrere Zellen, einschließlich einer bedienenden Zelle und mehrerer koordinierter Zellen außer der bedienenden Zelle, an das Benutzer-Endgerät (30) übertragen werden, wobei die mehreren drahtlosen Signale die gleichen Daten enthalten, wobei die bedienende Zelle eine drahtlose Ressource zum Austauschen von Steuerinformationen zum Steuern der Kommunikation zwischen dem Benutzer-Endgerät (30) und den Basisstationen (20) bereitstellt, wobei das Kommunikationssystem (1) ferner Folgendes umfasst:

eine Auswahleinheit (214), welche eine koordinierte Referenzzelle aus den mehreren koordinierten Zellen auswählt, wobei es sich bei der koordinierten Referenzzelle um eine Referenz zum Anpassen einer Phase der bedienenden Zelle handelt, die eine Phase in einer komplexen Ebene darstellt, die ein drahtloses Signal, das durch die bedienende Zelle übertragen wird, aufweist,
wobei das Benutzer-Endgerät (30) Folgendes umfasst:

eine Anpassungsparameter-Erhalteinheit (313), welche einen Anpassungsparameter zum Anpassen der Phase der bedienenden Zelle unter Verwendung des drahtlosen Signals, das durch die ausgewählte koordinierte Referenzzelle empfangen wird, und das drahtlose Signal, das durch die bedienende Zelle empfangen wird, erhält; und

eine Übertragungseinheit (302, 303, 304, 305), welche die Steuerinformationen, einschließlich des erhaltenen Anpassungsparameters, an eine bedienende Basisstation (20), welche die bedienende Zelle bereitstellt und bei welcher es sich um eine der mehreren Basisstationen (20) handelt, überträgt, wobei die bedienende Basisstation (20) einen Controller (203, 215) umfasst, welcher die Steuerinformationen empfängt und die Ausführung der CoMP-Kommunikation steuert, derart, dass die Phase der bedienenden Zelle auf der Grundlage des Anpassungsparameters, der in den empfangenen Steuerinformationen enthalten ist, angepasst wird.

2. Kommunikationssystem (1) nach Anspruch 1, wobei
in jeder der mehreren Zellen, das drahtlose Signal, das durch einen Vorcodierungsprozess unter Verwendung einer Vorcodierungsmatrix erhalten wird, an das Benutzer-Endgerät (30) übertragen wird; und wobei
die koordinierte Referenzzelle einen adaptiven Typ verwendet, welcher die Vorcodierungsmatrix gemäß eines Kommunikationszustands einer Zelle variiert, und
koordinierte Nicht-Referenzzellen jeweils einen nicht-adaptiven Typ verwenden, welcher die Vorcodierungsmatrix nicht gemäß eines Kommunikationszustands einer Zelle variiert, wobei es sich bei den koordinierten Nicht-Referenzzellen um die mehreren koordinierten Zellen außer der koordinierten Referenzzelle aus den mehreren koordinierten Zellen handelt.

3. Kommunikationssystem (1) nach Anspruch 2, wobei der nicht-adaptive Typ die Vorcodierungsmatrix jedes Mal zu einer von mehreren vorbestimmten Vorcodierungsmatrizen variiert, wenn ein periodischer Zyklus des Variierens verstreicht.

4. Kommunikationssystem (1) nach einem der Ansprüche 1 - 3, welches ferner eine Kommunikationszustand-Erhalteinheit (314) umfasst, welche einen Kommunikationszustandsparameter, der einen Kommunikationszustand jeder der mehreren Zellen darstellt, erhält, wobei
die Auswahleinheit (214) die koordinierte Referenzzelle auf der Grundlage des Kommunikationszustandsparameters, der für jede der mehreren Zellen erhalten wird, auswählt.

5. Kommunikationssystem (1) nach Anspruch 4, wobei die Auswahleinheit (214) eine Referenzsignal-Empfangsleistung (RSRP - *Reference Signal Received Power*) als den Kommunikationszustandsparameter verwendet und eine koordinierte Zelle, welche eine höhere RSRP aufweist, als die koordinierte Referenzzelle auswählt.

6. Kommunikationssystem (1) nach Anspruch 5, wobei die Auswahleinheit (214) eine koordinierte Zelle, welche die höchste RSRP aufweist, als die koordinierte Referenzzelle auswählt.

7. Kommunikationssystem (1) nach einem der Ansprüche 1 - 6, wobei die Auswahleinheit (214) die Zahl koordinierter Zellen, die auf der Grundlage von mindestens einem aus einem Kommunikationszustandsparameter, der einen Kommunikationszustand einer Zelle darstellt, und der Zahl koordinierter Zellen als koordinierte Referenzzellen ausgewählt werden, ändert.

8. Kommunikationssystem (1) nach einem der Ansprüche 1 - 7, wobei:

die Auswahleinheit (214) zwei oder mehr der mehreren koordinierten Zellen als zwei oder mehr der koordinierten Referenzzellen auswählt; und
die Anpassungsparameter-Erhalteinheit (313), für jede der ausgewählten koordinierten Referenzzellen, einen uneinheitlichen Anpassungsparameter, der die Kommunikationspfadkapazität der CoMP-Kommunikation, wenn die CoMP-Kommunikation nur durch die bedienende Zelle und die koordinierte Referenzzelle ausgeführt wird, zum Anpassen der Phase der bedienenden Zelle maximiert, erhält, und den Anpassungsparameter auf der Grundlage des uneinheitlichen Anpassungsparameters, der für jede der ausgewählten koordinierten Referenzzellen erhalten wird, erhält.

9. Kommunikationssystem (1) nach einem der Ansprüche 1 - 7, wobei:

die Auswahleinheit (214) zwei oder mehr der mehreren koordinierten Zellen als zwei oder mehr der koordinierten Referenzzellen auswählt; und

die Anpassungsparameter-Erhalteinheit (313), für jede der ausgewählten koordinierten Referenzzellen, den Anpassungsparameter, der die Kommunikationspfadkapazität der CoMP-Kommunikation, wenn die CoMP-Kommunikation nur durch die bedienende Zelle und die koordinierte Referenzzelle ausgeführt wird, maximiert, erhält.

10. Kommunikationssystem (1) nach einem der Ansprüche 1 - 7, wobei:

die Auswahleinheit (214) zwei oder mehr der mehreren koordinierten Zellen als zwei oder mehr der koordinierten Referenzzellen auswählt; und

die Anpassungsparameter-Erhalteinheit (313) den Anpassungsparameter, der die Kommunikationspfadkapazität der CoMP-Kommunikation, wenn die CoMP-Kommunikation nur durch die bedienende Zelle und die ausgewählte koordinierte Referenzzellen ausgeführt wird, maximiert, erhält.

11. Kommunikationssystem (1) nach einem der Ansprüche 1 - 7, wobei:

die Auswahleinheit (214) nur eine koordinierte Zelle als die koordinierte Referenzzelle auswählt; und

die Anpassungsparameter-Erhalteinheit (313) den Anpassungsparameter, der die Kommunikationspfadkapazität der CoMP-Kommunikation, wenn die CoMP-Kommunikation nur durch die bedienende Zelle und die ausgewählte koordinierte Referenzzelle ausgeführt wird, maximiert, erhält.

12. Kommunikationssystem (1) nach einem der Ansprüche 1-11, wobei, wenn die bedienende Basisstation (20) mindestens eine koordinierte Nicht-Referenzzelle bereitstellt, bei welcher es sich um eine der mehreren koordinierten Zellen außer der ausgewählten koordinierten Referenzzelle handelt, eine Phase der koordinierten Zelle in einer komplexen Ebene, die ein drahtloses Signal, das durch jede der mindestens einen koordinierten Nicht-Referenzzellen übertragen wird, aufweist, zusätzlich zu der Phase der bedienenden Zelle angepasst wird.

13. Benutzer-Endgerät (30) für ein Kommunikationssystem (1), welches das Benutzer-Endgerät (30) und mehrere Basisstationen (20) umfasst, wobei das Kommunikationssystem (1) CoMP (Coordinated Multi-Point) -Kommunikation ausführt, bei welcher mehrere drahtlose Signale durch mehrere Zellen, einschließlich einer bedienenden Zelle und mehrerer koordinierter Zellen außer der bedienenden Zelle, an das Benutzer-Endgerät (30) übertragen werden, wobei die mehreren drahtlosen Signale die gleichen Daten enthalten, wobei die bedienende Zelle eine drahtlose Ressource zum Austauschen von Steuerinformationen zum Steuern der Kommunikation zwischen dem Benutzer-Endgerät (30) und den Basisstationen (20) bereitstellt, wobei das Benutzer-Endgerät (30) Folgendes umfasst:

eine Anpassungsparameter-Erhalteinheit (313), welche einen Anpassungsparameter zum Anpassen der Phase der bedienenden Zelle unter Verwendung des drahtlosen Signals, das durch die bedienende Zelle empfangen wird, und des drahtlosen Signals, das durch die koordinierte Referenzzelle ausgewählt aus den mehreren koordinierten Zellen empfangen wird, erhält, wobei die koordinierte Referenzzelle als eine Referenz zum Anpassen der Phase der bedienenden Zelle, die eine Phase in einer komplexen Ebene darstellt, welche ein drahtloses Signal, das durch die bedienende Zelle übertragen wird, aufweist, ausgewählt wird; und

eine Übertragungseinheit (302, 303, 304, 305), welche die Steuerinformationen, einschließlich des erhaltenen Anpassungsparameters, an eine bedienende Basisstation (20), welche die bedienende Zelle bereitstellt und bei welcher es sich um eine der mehreren Basisstationen (20) handelt, überträgt.

14. Bedienende Basisstation (20) für ein Kommunikationssystem (1), welches ein Benutzer-Endgerät (30) und mehrere Basisstationen (20) umfasst, wobei das Kommunikationssystem (1) CoMP (Coordinated Multi-Point) -Kommunikation ausführt, bei welcher mehrere drahtlose Signale durch mehrere Zellen, einschließlich einer bedienenden Zelle und mehrerer koordinierter Zellen außer der bedienenden Zelle, an das Benutzer-Endgerät (30) übertragen werden, wobei die mehreren drahtlosen Signale die gleichen Daten enthalten, wobei die bedienende Zelle durch die bedienende Basisstation (20) bereitgestellt wird und eine drahtlose Ressource zum Austauschen von Steuerinformationen zum Steuern der Kommunikation zwischen dem Benutzer-Endgerät (30) und den Basisstationen (20) bereitstellt, wobei die bedienende Basisstation (20) Folgendes umfasst:

eine Auswahleinheit (214), welche eine koordinierte Referenzzelle aus den mehreren koordinierten Zellen auswählt, wobei es sich bei der koordinierten Referenzzelle um eine Referenz zum Anpassen einer Phase der bedienenden Zelle handelt, die eine Phase in einer komplexen Ebene darstellt, die ein drahtloses Signal, das durch die bedienende Zelle übertragen wird, aufweist; und

einen Controller (203, 215), welcher Steuerinformationen, einschließlich eines Anpassungsparameters zum Anpassen der Phase der bedienenden Zelle, empfängt, wobei der Anpassungsparameter durch das Benutzer-Endgerät (30) unter Verwendung des drahtlosen Signals, das durch die ausgewählte koordinierte Referenzzelle empfangen wird, und des drahtlosen Signals, das durch die bedienende Zelle empfangen wird, erhalten wird, und die Ausführung der CoMP-Kommunikation steuert, derart, dass die Phase der bedienenden Zelle auf der Grundlage des Anpassungsparameters, der in den empfangenen Steuerinformationen enthalten ist, angepasst wird.

## Revendications

1. Système de communication (1) comprenant un terminal d'utilisateur (30) et une pluralité de stations de base (20), le système de communication (1) mettant en oeuvre une communication multipoint coordonnée (CoMP) où une pluralité de signaux sans fil est transmise au terminal d'utilisateur (30) à travers une pluralité de cellules incluant une cellule de desserte et une pluralité de cellules coordonnées, à l'exception de la cellule de desserte, la pluralité de signaux sans fil contenant les mêmes données, la cellule de desserte fournissant une ressource sans fil en vue d'échanger des informations de commande pour commander la communication entre le terminal d'utilisateur (30) et les stations de base (20), le système de communication (1) comprenant en outre :

   un sélecteur (214) qui sélectionne une cellule coordonnée de référence parmi la pluralité de cellules coordonnées, la cellule coordonnée de référence correspondant à une référence pour ajuster une phase de cellule de desserte représentant une phase sur un plan complexe que présente un signal sans fil transmis à travers la cellule de desserte ;
   le terminal d'utilisateur (30) comportant :

      un module d'obtention de paramètre d'ajustement (313) qui obtient un paramètre d'ajustement pour ajuster la phase de cellule de desserte en utilisant le signal sans fil reçu par le biais de la cellule coordonnée de référence sélectionnée et le signal sans fil reçu par le biais de la cellule de desserte ; et
      un émetteur (302, 303, 304, 305) qui transmet les informations de commande incluant le paramètre d'ajustement obtenu à une station de base de desserte (20) qui fournit la cellule de desserte et qui correspond à l'une de la pluralité de stations de base (20) ;

   la station de base de desserte (20) comprenant un contrôleur (203, 215) qui reçoit les informations de commande et commande l'exécution de la communication CoMP de sorte que la phase de cellule de desserte est ajustée sur la base du paramètre d'ajustement inclus dans les informations de commande reçues.

2. Système de communication (1) selon la revendication 1, dans lequel :

   dans chacune de la pluralité de cellules, le signal sans fil obtenu par un processus de précodage en utilisant une matrice de précodage est transmis au terminal d'utilisateur (30) ; et dans lequel
   la cellule coordonnée de référence utilise un type adaptatif qui modifie la matrice de précodage selon un état de communication d'une cellule ; et
   des cellules coordonnées de non-référence utilisent chacune un type non adaptatif qui ne modifie pas la matrice de précodage selon un état de communication d'une cellule, les cellules coordonnées de non-référence correspondant à la pluralité de cellules coordonnées à l'exception de la cellule coordonnée de référence parmi la pluralité des cellules coordonnées.

3. Système de communication (1) selon la revendication 2, dans lequel le type non adaptatif modifie la matrice de précodage en l'une d'une pluralité de matrices de précodage prédéterminées à chaque fois qu'un cycle périodique de modification s'écoule.

4. Système de communication (1) selon l'une quelconque des revendications 1 à 3, comprenant en outre un module d'obtention d'état de communication (314) qui obtient un paramètre d'état de communication représentant un état de communication de chacune de la pluralité de cellules, dans lequel
   le sélecteur (214) sélectionne la cellule coordonnée de référence sur la base du paramètre d'état de communication obtenu pour chacune de la pluralité de cellules.

5. Système de communication (1) selon la revendication 4, dans lequel le sélecteur (214) utilise une puissance reçue de signal de référence (RSRP) en qualité de paramètre d'état de communication, et sélectionne une cellule coordonnée présentant une puissance RSRP supérieure à celle de la cellule coordonnée de référence.

6. Système de communication (1) selon la revendication 5, dans lequel le sélecteur (214) sélectionne une cellule coordonnée présentant la puissance RSRP la plus élevée en qualité de cellule coordonnée de référence.

7. Système de communication (1) selon l'une quelconque des revendications 1 à 6, dans lequel le sélecteur (214) change le nombre de cellules coordonnées sélectionnées en qualité de cellules coordonnées de référence sur la base d'au moins l'un parmi un paramètre d'état de communication représentant un état de communication d'une cellule et le nombre des cellules coordonnées.

8. Système de communication (1) selon l'une quelconque des revendications 1 à 7, dans lequel :

   le sélecteur (214) sélectionne deux cellules ou plus de la pluralité de cellules coordonnées en tant que deux cellules ou plus des cellules coordonnées de référence ; et
   le module d'obtention de paramètre d'ajustement (313) obtient, pour chacune des cellules coordonnées de référence sélectionnées, un paramètre d'ajustement non réglé qui maximise la capacité de chemin de communication de la communication CoMP lorsque la communication CoMP est mise en oeuvre uniquement par la cellule de desserte et la cellule coordonnée de référence, en vue d'ajuster la phase de cellule de desserte, et obtient le paramètre d'ajustement sur la base du paramètre d'ajustement non réglé pour chacune des cellules coordonnées de référence sélectionnées.

9. Système de communication (1) selon l'une quelconque des revendications 1 à 7, dans lequel :

   le sélecteur (214) sélectionne deux cellules ou plus de la pluralité de cellules coordonnées en tant que deux cellules ou plus des cellules coordonnées de référence ; et
   le module d'obtention de paramètre d'ajustement (313) obtient, pour chacune des cellules coordonnées de référence sélectionnées, le paramètre d'ajustement qui maximise la capacité de chemin de communication de la communication CoMP lorsque la communication CoMP est mise en oeuvre uniquement par la cellule de desserte et la cellule coordonnée de référence.

10. Système de communication (1) selon l'une quelconque des revendications 1 à 7, dans lequel :

    le sélecteur (214) sélectionne deux cellules ou plus de la pluralité de cellules coordonnées en tant que deux cellules ou plus des cellules coordonnées de référence ; et
    le module d'obtention de paramètre d'ajustement (313) obtient le paramètre d'ajustement qui maximise la capacité de chemin de communication de la communication CoMP lorsque la communication CoMP est mise en oeuvre uniquement par la cellule de desserte et les cellules coordonnées de référence sélectionnées.

11. Système de communication (1) selon l'une quelconque des revendications 1 à 7, dans lequel :

    le sélecteur (214) sélectionne uniquement une cellule coordonnée en tant que la cellule coordonnée de référence ; et
    le module d'obtention de paramètre d'ajustement (313) obtient le paramètre d'ajustement qui maximise la capacité de chemin de communication de la communication CoMP lorsque la communication CoMP est mise en oeuvre uniquement par la cellule de desserte et la cellule coordonnée de référence sélectionnée.

12. Système de communication (1) selon l'une quelconque des revendications 1 à 11, dans lequel, lorsque la station de base de desserte (20) fournit au moins une cellule coordonnée de non-référence qui correspond à l'une de la pluralité de cellules coordonnées à l'exception de la cellule coordonnée de référence sélectionnée, une phase de cellule coordonnée sur un plan complexe que présente un signal sans fil transmis par le biais de chacune de ladite au moins une cellule coordonnée de non-référence est ajustée, outre la phase de cellule de desserte.

13. Terminal d'utilisateur (30) pour un système de communication (1) comprenant le terminal d'utilisateur (30) et une pluralité de stations de base (20), le système de communication (1) mettant en oeuvre une communication multipoint coordonnée (CoMP) où une pluralité de signaux sans fil est transmise au terminal d'utilisateur (30) à travers une pluralité de cellules incluant une cellule de desserte et une pluralité de cellules coordonnées, à l'exception de la cellule de desserte, la pluralité de signaux sans fil contenant les mêmes données, la cellule de desserte fournissant une ressource sans fil en vue d'échanger des informations de commande pour commander la communication entre le terminal d'utilisateur (30) et les stations de base (20), le terminal d'utilisateur (30) comprenant en outre :

un module d'obtention de paramètre d'ajustement (313) qui obtient un paramètre d'ajustement pour ajuster une phase de cellule de desserte en utilisant le signal sans fil reçu par le biais de la cellule de desserte et le signal sans fil reçu par le biais d'une cellule coordonnée de référence sélectionnée parmi la pluralité de cellules coordonnées, la cellule coordonnée de référence étant sélectionnée en qualité de référence en vue d'ajuster la phase de cellule de desserte représentant une phase sur un plan complexe que présente un signal sans fil transmis par le biais de la cellule de desserte ; et

un émetteur (302, 303, 304, 305) qui transmet les informations de commande incluant le paramètre d'ajustement obtenu à une station de base de desserte (20) qui fournit la cellule de desserte et qui correspond à l'une de la pluralité de stations de base (20).

14. Station de base de desserte (20) pour un système de communication (1) comportant un terminal d'utilisateur (30) et une pluralité de stations de base (20), le système de communication (1) mettant en oeuvre une communication multipoint coordonnée (CoMP) où une pluralité de signaux sans fil est transmise au terminal d'utilisateur (30) par le biais d'une pluralité de cellules incluant une cellule de desserte et une pluralité de cellules coordonnées à l'exception de la cellule de desserte, la pluralité de signaux sans fil contenant les mêmes données, la cellule de desserte étant fournie par la station de base de desserte (20) et fournissant une ressource sans fil pour échanger des informations de commande pour commander la communication entre le terminal d'utilisateur (30) et les stations de base (20), la station de base de desserte (20) comprenant :

un sélecteur (214) qui sélectionne une cellule coordonnée de référence parmi la pluralité de cellules coordonnées, la cellule coordonnée de référence correspondant à une référence pour ajuster une phase de cellule de desserte représentant une phase sur un plan complexe que présente un signal sans fil transmis à travers la cellule de desserte ; et

un contrôleur (203, 215) qui reçoit des informations de commande incluant un paramètre d'ajustement pour ajuster la phase de cellule de desserte, le paramètre d'ajustement étant obtenu par le terminal d'utilisateur (30) en utilisant le signal sans fil reçu par le biais de la cellule coordonnée de référence sélectionnée et le signal sans fil reçu par le biais de la cellule de desserte, et qui commande l'exécution de la communication CoMP de sorte que la phase de cellule de desserte est ajustée sur la base du paramètre d'ajustement inclus dans les informations de commande reçues.

FIG. 1

FIG. 2

BASE STATION ⌐20

WIRELESS COMMUNICATION DEVICE ⌐21

WIRED COMMUNICATION DEVICE ⌐22

WIRELESS SIGNAL PROCESSOR ⌐23

DIGITAL SIGNAL PROCESSOR ⌐24

# FIG. 3

┌─────────────────────────────────┐ ─30
│         USER TERMINAL            │
│                                  │
│   ┌─────────────────────┐ ─31    │
│   │      WIRELESS        │       │
│   │   COMMUNICATION      │       │
│   │      DEVICE          │       │
│   └─────────────────────┘       │
│                                  │
│   ┌─────────────────────┐ ─32    │
│   │  WIRELESS SIGNAL     │       │
│   │    PROCESSOR         │       │
│   └─────────────────────┘       │
│                                  │
│   ┌─────────────────────┐ ─33    │
│   │  DIGITAL SIGNAL      │       │
│   │    PROCESSOR         │       │
│   └─────────────────────┘       │
│                                  │
│   ┌─────────────────────┐ ─34    │
│   │    INPUT DEVICE      │       │
│   └─────────────────────┘       │
│                                  │
│   ┌─────────────────────┐ ─35    │
│   │   OUTPUT DEVICE      │       │
│   └─────────────────────┘       │
│                                  │
└─────────────────────────────────┘

## FIG. 4

FIG. 5

# FIG. 6

| USER TERMINAL #1 (30-1) | BASE STATION #1 (20-1) | BASE STATION #2 (20-2) | BASE STATION #3 (20-3) |
|---|---|---|---|

S101 — TRANSMIT DL REFERENCE SIGNAL

S102 — TRANSMIT DL REFERENCE SIGNAL

S103 — TRANSMIT DL REFERENCE SIGNAL

S104 — CALCULATE RSRP

S105 — TRANSMIT RSRP INFORMATION

S106 — DETERMINE PRECODING TYPE

S107 — TRANSMIT CoMP INFORMATION

S108 — TRANSMIT DL REFERENCE SIGNAL

S109 — TRANSMIT DL REFERENCE SIGNAL

S110 — TRANSMIT DL REFERENCE SIGNAL

S111 — SELECT PRECODING MATRIX

S112 — CALCULATE PHASE ADJUSTING AMOUNT

S113 — TRANSMIT PHASE ADJUSTING AMOUNT

S114 — TRANSMIT UL REFERENCE SIGNAL

S115 — SELECT PRECODING MATRIX ACCORDING TO ADAPTIVE TYPE

S116 — SELECT PRECODING MATRIX ACCORDING TO ADAPTIVE TYPE

S117 — SELECT PRECODING MATRIX ACCORDING TO NON-ADAPTIVE TYPE

S118 — ADJUST PHASE AND TRANSMIT DATA SIGNAL

S119 — TRANSMIT DATA SIGNAL

S120 — TRANSMIT DATA SIGNAL

# FIG. 7

PROCESS FOR
CALCULATING PHASE
ADJUSTING AMOUNT

RECEIVE DL
REFERENCE SIGNAL? — No
S201

Yes

S202
CALCULATE RSRP

S203
TRANSMIT RSRP
INFORMATION

RECEIVE CoMP
INFORMATION? — No
S204

Yes

RECEIVE DL
REFERENCE SIGNAL? — No
S205

Yes

S206
ESTIMATE DL CHANNEL STATE

S207
SELECT PRECODING MATRIX

S208
CALCULATE PHASE
ADJUSTING AMOUNT

S209
TRANSMIT PHASE
ADJUSTING AMOUNT

S210
COMPLETE DATA
RECEPTION IN CoMP
COMMUNICATION? — No

Yes

RETURN

# FIG. 8

```
        ┌─────────────────────┐
        │   PROCESS OF CoMP    │
        │  COMMUNICATION AT    │
        │    SERVING CELL      │
        └─────────────────────┘
                  │
                  ▼
            ╱───────────╲           No
           ╱ RECEIVE RSRP ╲───────────┐
           ╲ INFORMATION? ╱           │
            ╲───────────╱  S301       │
                │ Yes                 │
                ▼        S302         │
        ┌─────────────────────┐      │
        │ DETERMINE PRECODING │      │
        │        TYPE         │      │
        └─────────────────────┘      │
                  │      S303         │
                  ▼                   │
        ┌─────────────────────┐      │
        │ TRANSMIT CoMP        │      │
        │ INFORMATION          │      │
        └─────────────────────┘      │
                  │                   │
                  ▼◄──────────────────┐
            ╱───────────╲    No       │
           ╱ RECEIVE UL   ╲───────────┤
           ╲REFERENCE SIGNAL?╱        │
            ╲───────────╱  S304       │
                │ Yes                 │
                ▼        S305         │
        ┌─────────────────────┐      │
        │ESTIMATE UL CHANNEL   │      │
        │      STATE           │      │
        └─────────────────────┘      │
                  │      S306         │
                  ▼                   │
        ┌─────────────────────┐      │
        │ SELECT PRECODING     │      │
        │      MATRIX          │      │
        └─────────────────────┘      │
                  │      S307         │
                  ▼                   │
            ╱───────────╲    No       │
           ╱ DATA TRANSMISSION╲───────┘
           ╲    TIMING?      ╱
            ╲───────────╱
                │ Yes
                ▼        S308
        ┌─────────────────────┐
        │ ADJUST PHASE AND     │
        │ TRANSMIT DATA SIGNAL │
        └─────────────────────┘
                  │
                  ▼
        ┌─────────────────────┐
        │       RETURN         │
        └─────────────────────┘
```

# FIG. 9

PROCESS OF CoMP
COMMUNICATION AT
COORDINATED CELL

RECEIVE CoMP
INFORMATION? — No — S401

Yes

PRECODING TYPE IS
ADAPTIVE TYPE? — No — S402

Yes

RECEIVE UL
REFERENCE SIGNAL? — No — S403

Yes

S404
ESTIMATE UL CHANNEL STATE

S405
SELECT PRECODING MATRIX

S406
DATA TRANSMISSION
TIMING? — No

Yes

S407
TRANSMIT DATA SIGNAL

RETURN

FIG. 10

```
     ┌─────────────────────────────────┐
     │ PROCESS OF UPDATING PHASE       │
     │     ADJUSTING AMOUNT            │
     └─────────────────────────────────┘
                    │
                    ▼
         ┌────────────────────┐
         │  RECEIVE PHASE     │  No
     ◄───┤ ADJUSTING AMOUNT?  ├────
         └────────────────────┘    S501
                  │ Yes
                  │        S502
                  ▼
         ┌────────────────────┐
         │  UPDATE PHASE      │
         │ ADJUSTING AMOUNT   │
         └────────────────────┘
```

FIG. 11

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2011004161 A
- JP 2012178822 A
- JP 2012521112 A
- JP 2012520001 A

### Non-patent literature cited in the description

- Technical Specification Group Radio Access Network; Coordinated multi-point operation for LTE physical layer aspects (Release 11). *3GPP TR36.819,* December 2011
- CoMP JT evaluation for Phase II Heterogeneous Deployment. *R1-112155, 3GPP TSG RAN WG1 Meeting #66,* 22 October 2011